# EUROPEAN PATENT SPECIFICATION

(11) **EP 2 166 702 B1**
(45) Date of publication and mention of the grant of the patent: **31.08.2011**
(21) Application number: 09170086.4
(22) Date of filing: 11.09.2009
(51) Int. Cl.: H04L 12/24, H04W 88/04

(54) **Mobile terminal, working device, data management system, and recording medium**
Mobiles Endgerät, Arbeitsvorrichtung, Datenverwaltungssystem und Aufzeichnungsmedium
Terminal mobile, dispositif de travail, système de gestion de données, et support d'enregistrement

(30) Priority: 19.09.2008 JP 2008240341
(43) Date of publication of application: 24.03.2010
(73) Proprietor: FUJITSU LIMITED, Kawasaki-shi, Kanagawa 211-8588 (JP)
(72) Inventor: Fujimoto, Shingo, Kawasaki-shi Kanagawa 211-8588 (JP); Matsui, Kazuki, Kawasaki-shi Kanagawa 211-8588 (JP)
(74) Representative: Ward, James Norman

(56) References cited:
- EP-A1- 1 602 999
- US-A1- 2003 126 215
- US-A1- 2005 120 199
- US-A1- 2006 017 659

## Description

### TECHNICAL FIELD

The present invention relates to a mobile terminal, a working device and a data management system. In particular, the present Invention relates to a mobile terminal, a working device and a data management system that manage transmitted data.

### BACKGROUND ART

In recent years, information has been required to be managed securely. When data is transmitted to a mobile terminal, such as a mobile phone, in order to use the stored data if necessary, a management server monitors the data transmitted to the mobile terminal. The management server is connected to the mobile terminal through a network. The management server erases the data from the mobile terminal through a remote operation, if necessary (for example, Japanese Patent Application Laid-Open (JP-A) No. 2007-207171).

Meanwhile, at the time of maintenance work in customer companies, in regard to a mobile terminal such as a mobile phone whose function is limited, if the mobile terminal has an external communication (network connection) function, the mobile terminal is strictly prohibited from being brought in. In this case, a worker who performs the work transmits data, which is needed for a working device such as an electronic paper or electronic book terminal having no external communication function, through a local external connection and performs the work, and erases the data from the working device after the work is completed.
EP 1602999 discloses a data reproduction method for reproducing data embedded in a data object. The method comprises verifying the rights of the user using a biometric user recognition program, and reproducing the embedded data with a user device using a data reproduction application.
US 2003/0126215 discloses a self-destructing document and e-mail messaging system that automatically destroys documents or e-mails at a predetermined time by attaching a virus to the document or e-mail.

### SUMMARY OF THE INVENTION

For example, in the data management model according to the related art where the management server that is connected to the mobile terminal through the network monitors the data transmitted to the mobile terminal and erases the data from the mobile terminal through a remote operation if necessary, when it is needed to strictly manage the inflow of data, the management server always monitors the inflow of data, and the mobile terminal is required to report the Inflow of data to the management server, if necessary.

However, when the data is transmitted to the working device having no external communication function, in the data management model according to the related art, the management server and the working device cannot directly communicate with each other, and data monitoring and a remote operation cannot be performed. For this reason, the data that is transmitted to the working device may be intercepted or copied.

Accordingly, in order to prevent the data transmitted to the working device from being stolen or copied, in some cases, the data transmitted to the working device is subjected to an encryption process allowing the data to be copied only within an available period.

However, when the data transmitted to the working device is subjected to an encryption process allowing the data to be copied only within an available period, the available period set once cannot be changed. For this reason, in order to perform the work without depending on the available period even when the work is delayed, the available period is set to be excessively long.

As such, since the data that is transmitted to the working device having no external communication function cannot be monitored by the monitoring server and cannot be subjected to the remote operation, the data cannot be easily managed.

Accordingly, the present invention has been made in view of the above-described problems, and it is an object of the present invention to provide a mobile terminal, a working device and a data management system that can facilitate a management of data transmitted to the working device having no external communication function.

According to an embodiment of the present invention, there is provided a mobile terminal as defined in claim 1.

According to another embodiment of the present invention, there is provided a working device as defined in claim 4.

Further, application of the components according to one embodiment of the present invention, an expression thereof or any combination of the components to a method, apparatus, a system, a computer program, a recording medium, and a data structure are effective as aspects of the present invention.

As described above, according to one embodiment of the present invention, it is possible to provide a mobile terminal, a working device and a data management system that can facilitate a management of data transmitted to the working device having no external communication function.

The object and advantages of the embodiment will be realized and attained by means of the elements and combinations particularly pointed out in the claims.

It is to be understood that both the foregoing general description and the following detailed description are exemplary and explanatory and are not restrictive of the embodiment, as claimed.

The above-described embodiments of the present invention are intended as examples, and all embodiments of the present invention are not limited to including the features described above.

### BRIEF DESCRIPTION OF THE DRAWINGS

FIG. 1 illustrates the outline of a data management system;

FIG. 2 illustrates the configuration of a data management system according to a first embodiment;

FIG. 3 illustrates a process sequence of a data management system 1 of when a maintenance worker performs system maintenance work using work procedure manual data as management object data;

FIG. 4 illustrates a process sequence of a security specification acquiring process;

FIG. 5 illustrates a sequence of a data transmitting process;

FIG. 6 illustrates a sequence of a data erasing process;

FIG. 7 illustrates a data management contract creating process that is executed by a data management contract creator;

FIG. 8 illustrates the configuration of a data management system according to a second embodiment;

FIG. 9 illustrates the configuration of a data management system according to a third embodiment;

FIG. 10 illustrates the configuration of a data management system according to a fourth embodiment;

FIG. 11 illustrates the configuration of a data management system according to a fifth embodiment; and

FIG. 12 illustrates the configuration of a data management system according to a sixth embodiment.

### DETAILED DESCRIPTION OF THE INVENTION

Reference may now be made in detail to embodiments of the present invention, examples of which are illustrated in the accompanying drawings, wherein like reference numerals refer to like elements throughout.

Next, the preferred embodiments of the present invention will be described in detail with reference to the accompanying drawings.

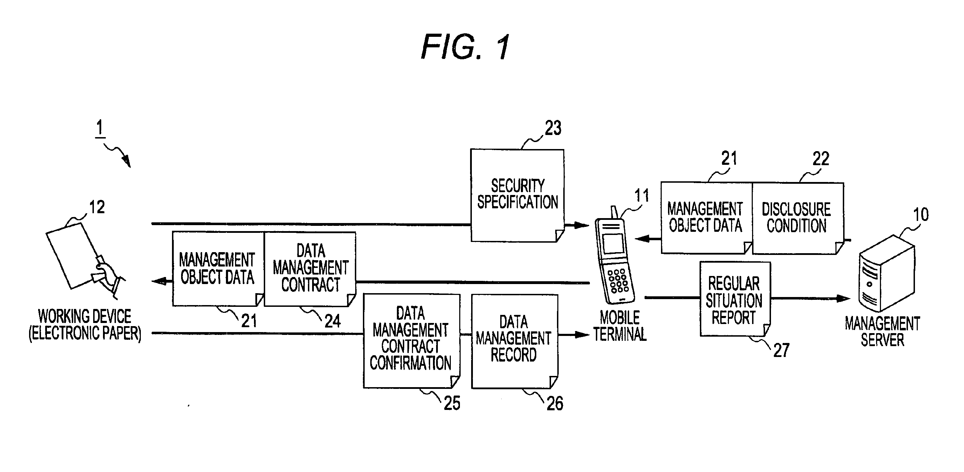

FIG. 1 illustrates the outline of a data management system according to a first embodiment of the present invention. The data management system illustrated in FIG. 1 includes a management server 10, a mobile terminal 11, and a working device 12. The management server 10 and the mobile terminal 11 are connected to each other through a network, such as a mobile telephone network. Further, the mobile terminal 11 and the working device 12 are locally connected to each other through wired communication like a USB or wireless communication like infrared communication or Bluetooth.

In the case of conforming to an OMA (Open Mobile Alliance), the management server 10 corresponds to a device management server, and the mobile terminal 11 corresponds to a device management client. The management server 10 and the mobile terminal 11 communicate with each other using an OMA device management protocol.

The data management system 1 performs a data management in the working device 12 by a delegation of authority from the management server 10 to the mobile terminal 11. When the management server 10 provides management object data 21 to the mobile terminal 11, the management server 10 transmits a disclosure condition 22 describing a management of the management object data 21 along with the management object data 21 to the mobile terminal 11.

The mobile terminal 11 acts a data management according to the disclosure condition 22 even in an off-line state where it is not possible to communicate with the management server 10. When the management object data 21 that is transmitted to the mobile terminal 11 is transmitted to the working device 12, the mobile terminal 11 acquires a security specification 23 from the working device 12.

The mobile terminal 11 uses the security specification 23, thereby evaluating whether the working device 12 conforms to the disclosure condition 22. When it is evaluated that the working device 12 conforms to the disclosure condition 22, the mobile terminal 11 provides a data management contract 24 and transmits the management object data 21 to the working device 12.

The working device 12 that has received the management object data 21 returns a data management contract confirmation 25 to the mobile terminal 11, and executes a management according to the data management contract 24. Further, if necessary, the working device 12 transmits a management event as a data management record 26 to the mobile terminal 11. The mobile terminal 11 asynchronously notifies the management server 10 of the data management record 26 as a regular situation report 27.

Further, the data management system 1 performs a dynamic modification on the disclosure condition after the working device 12 receives the management object data 21 and the data management contract 24 and an automatic report thereof. In the disclosure condition 22, an execution condition of a safety action and an alleviating modification on the execution condition can be optionally designated. When the alleviation of the execution condition (specifically, for example, extending expiration timer) is made, a message indicating the alleviation of the execution condition as the data management record 26 (for example, setting a new expiration timer with longer value) is transmitted from the working device 12 to the mobile terminal 11. The mobile terminal 11 asynchronously notifies the management server 10 of the data management record 26 as the regular situation report 27.

Hereinafter, first to sixth embodiments of the data management system 1 will be described.

[First Embodiment]

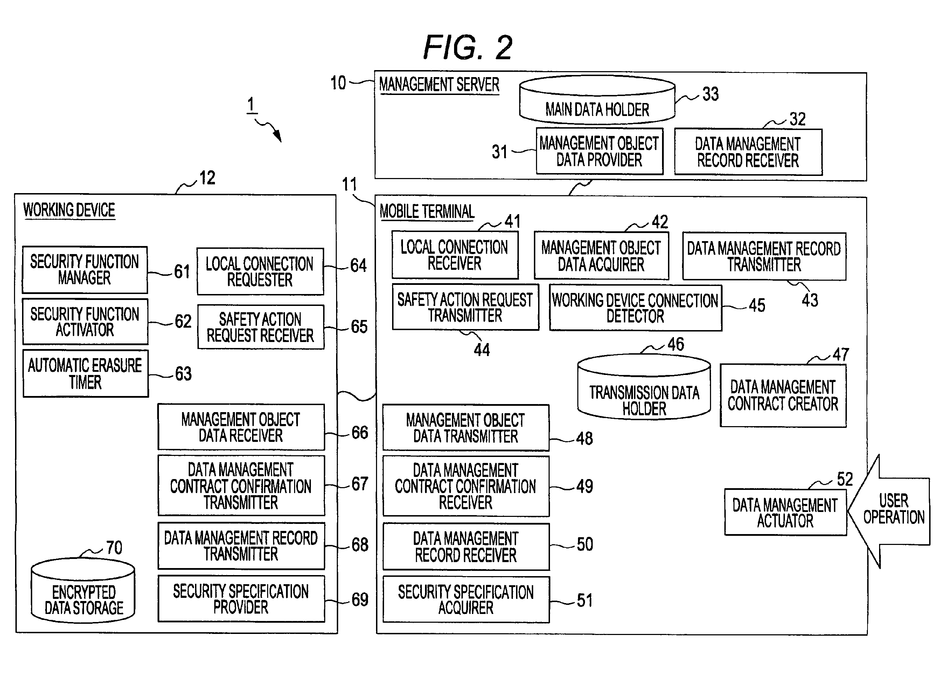

FIG. 2 illustrates the configuration of a data management system according to a first embodiment. A management server 10 of a data management system 1 according to the first embodiment includes a management object data provider 31, a data management record receiver 32, and a main data holder 33.

A mobile terminal 11 of the data management system 1 according to the first embodiment includes a local connection receiver 41, a management object data acquirer 42, a data management record transmitter 43, a safety action request transmitter 44, a working device connection detector 45, a transmission data holder 46, a data management contract creator 47, a management object data transmitter 48, a data management contract confirmation receiver 49, a data management record receiver 50, a security specification acquirer 51, and a data management actuator 52.

A working device 12 of the data management system 1 according to the first embodiment includes a security function manager 61, a security function activator 62, an automatic erasure timer 63, a local connection requester 64, a safety action request receiver 65, a management object data receiver 66, a data management contract confirmation transmitter 67, a data management record transmitter 68, a security specification provider 69, and an encrypted data storage 70.

The management object data provider 31 of the management server 10 provides the management object data, which is held by the main data holder 33, to the management object data acquirer 42 in accordance with a management object data acquisition request transmitted from the management object data acquirer 42 of the mobile terminal 11. At this time, the disclosure condition is contained in the management object data.

An authorized transfer condition is described in the disclosure condition for the management object data, which is received by the mobile terminal 11 from the management server 10. The mobile terminal 11 evaluates this authorized transfer condition, when it is transferring the management data to the working device 12, during an off-line state in which it is not possible to communicate with the management server 10. The management object data acquirer 42 holds the provided management object data and disclosure condition in the transmission data holder 46.

A worker locally connects the working device 12 to the mobile terminal 11 and gives an instruction so that the management object data is transmitted from the mobile terminal 11 to the working device 12. The local connection receiver 41 of the mobile terminal 11 is locally connected to the local connection requester 64 of the working device 12 in accordance with a local connection request transmitted from the local connection requester 64 of the working device 12. The working device connection detector 45 detects when the working device 12 is locally connected.

At this time, the security specification acquirer 51 of the mobile terminal 11 inquires the security specification provider 69 of the working device 12, which is to be a transmission destination of the management object data, about a security specification. The security specification provider 69 provides the security specification of the working device 12 to the security specification acquirer 51 of the mobile terminal 11.

As the inquiry result, the security specification acquirer 51 of the mobile terminal 11 acquires the security specification, which describes a security function that is able to be activated in the working device 12 and an option parameter value (range thereof) that can be set along with the security function.

The data management actuator 52 requests the data management contract creator to create a data management contract with both a disclosure condition and a security specification. The disclosure condition is applied to the management object data transmitted from the management object data transmitter 48 to the management object data receiver 66 of the working device 12. The security specification is acquired by the security specification acquirer 51 from the security specification provider 69 of the working device 12.

When it is determined that it is not possible to satisfy the disclosure condition which is described in the delivered security specification, the data management contract creator 47 notifies the data management actuator 52 of a creation failure of the data management contract creation. In this case, the data management actuator 52 rejects the instruction from the worker.

Meanwhile, if the data management contract creator 47 determined that it is possible to satisfy the disclosure condition in the delivered security specification, the data management contract creator 47 creates the data management contract. When the data management contract is successfully created, the management object data transmitter 48 applies the data management contract to the management object data. The management object data transmitter 48 also transmits the management object data to the management object data receiver 66 of the working device 12.

If the security function manager 61 of the working device 12 receives the management object data where the data management contract is applied, the security function manager 61 analyzes the data management contract and determines the requested security function. The security function activator 62 performs activation of the security function that is requested by the data management contract.

In the working device 12 illustrated in FIG. 2, the automatic erasure timer 63 and the encrypted data storage 70 are activated as the security function. The automatic erasure timer 63 erases the received management object data after a predetermined time passes. Further, the encrypted data storage 70 encrypts and holds the received management object data.

When the security functions are successfully activated, the data management contract confirmation transmitter 67 transmits the data management contract confirmation 25 to the data management contract confirmation receiver 49 of the mobile terminal 11. If the mobile terminal 11 receives the data management contract confirmation 25, the mobile terminal 11 transmits the data management contract confirmation 25 from the data management record transmitter 43 to the data management record receiver 32 of the management server 10.

When the work using the working device 12 is completed, the worker locally connects the working device 12 to the mobile terminal 11 again. The data management record transmitter 68 of the working device 12 transmits a data management record 26 to the data management record receiver 50 of the mobile terminal 11. The data management record 26 is an evidence for that the management object data 21 has been managed in accordance with the data management contract 24 that is applied to the management object data 21 transmitted from the mobile terminal 11 to the working device 12.

The safety action request transmitter 44 of the mobile terminal 11 investigates the data management record 26 that is received by the data management record receiver 50, and determines whether the erasure of the management object data is executed. If the erasure of the management object data 21 is not executed, the safety action request transmitter 44 transmits a safety action request to the safety action request receiver 65 of the working device 12. The safety action request is an instruction to erase the management object data. When the encrypted data storage 70 receives the safety action request, the encrypted data storage 70 erases the held management object data 21.

At this time, the data management record transmitter 68 of the working device 12 transmits a data management record 26 where the execution of the erasure of the management object data is recorded to the data management record receiver 50 of the mobile terminal 11. The data management record transmitter 43 of the mobile terminal 11 transmits a series of data management records that the data management record receiver 50 has received from the data management record transmitter 68 of the working device 12 to the data management record receiver 32 of the management server 10.

Further, if an execution condition of the safety action that is designated in the data management contract is satisfied during the work using the working device 12, the working device 12 autonomously executes the safety action that is designated in the data management contract. Further, the execution result of the safety action is recorded as the data management record. As described above, the recorded data management record 26 is transmitted to the mobile terminal 11, when the working device 12 is locally connected to the mobile terminal 11 again.

In the data management system 1 according to the first embodiment, the disclosure condition is applied to the management object data by the management object data provider 31 of the management server 10. The mobile terminal 11 can manage the management object data without always performing communication with the management server 10.

Further, the management server 10 can receive the data management record by the data management record transmitter 43 of the mobile terminal 11. The data management record is where a management situation of the management object data is recorded by the mobile terminal 11 or the working device 12. The management server 10 can safely manage the management object data without being directly connected to the working device 12.

Meanwhile, by the data management contract creator 47 of the mobile terminal 11, the mobile terminal 11 creates the data management contract based on the security specification acquired from the working device 12 and the disclosure condition applied to the management object data acquired from the management server 10. The mobile terminal 11 applies the data management contract to the management object data and transmits the management object data to the working device 12.

The working device 12 uses the data management contract, thereby conforming to the required disclosure condition without analyzing a complicated disclosure condition. At this time, the mobile terminal 11 receives the data management contract confirmation from the working device 12, thereby constructing a trust relationship between the working device 12 and the mobile terminal 11 and verifying which security functions on the working device are activated.

Further, when the working device 12 is locally connected to the mobile terminal 11 again, by the function of the safety action request transmitter 44 of the mobile terminal 11, the mobile terminal 11 executes a safety action with respect to the management object data transmitted to the working device 12. The mobile terminal 11 receives the data management record as a confirmation of the safety action, thereby verifying that the management object data is securely erased from the working device 12, after the work is completed.

Here, as an example of the data management system 1 according to the first embodiment, a data management system 1 that supports system maintenance work will be described. The data management system 1 that supports the system maintenance work includes a management server 10, a mobile terminal 11 that a maintenance worker carries, and a working device 12 that is used for customer work.

The mobile terminal 11 that an individual maintenance worker carries is used for carrying company secret information. The mobile terminal 11 has three kinds of communication mechanisms, for example, a mobile telephone network interface that has a low-speed communication speed and can be used outside a company, a wireless LAN interface that has a high-speed communication speed but cannot be used outside the company, and a Bluetooth communication interface to communicate with the working device 12. The mobile terminal 11 can always communicate with the management server 10 using a wireless LAN inside the company and a mobile telephone network outside the company.

Further, the post where the maintenance worker belongs possesses the management server 10 that manages company secret information. The management server 10 is disposed on a network that can be connected to both the wireless LAN used by the mobile terminal 11 and a dial-up line from the outside of the company.

Meanwhile, if an security policy at an office of a customer is very strict, carrying an apparatus having an external communication function into the office may be prohibited. In this case, the mobile terminal 11 having the external communication function should be left in a locker room that is prepared in an entrance of the office.

Meanwhile, a work procedure manual that is used for system maintenance work is generally secret information of a maintenance company. Accordingly, when the maintenance worker brings the work procedure manual outside the company, the maintenance worker is obliged to store the work procedure manual in the mobile terminal 11 corresponding to the monitoring and remote operation from the management server 10 and bring the work procedure manual outside the company. In order to conform to the rules of the company and the rules of the customer, before entering in the office of the customer, the maintenance worker transmits the work procedure manual from the mobile terminal 11 storing the work procedure manual to the working device 12 having no external communication (network connection) function, carries the working device 12, and performs system maintenance work.

Communication between the mobile terminal 11 and the working device 12 is performed on the local connection connected in accordance with necessity. The communication may be wired communication such as a USB or a wireless communication such as infrared communication and Bluetooth. The working device 12 includes, for example, a touch-panel-type display. The working device 12 can record a work progress situation in a form input field of the work procedure manual, as the maintenance worker touches the display. Further, the working device 12 can input a short text using a software keyboard displayed on the display.

At a point of time when the system maintenance work is completed, the maintenance worker returns to the locker room. Then, the maintenance worker transmits the work result from the working device 12 to the mobile terminal 11, then the maintenance worker erases the data that is stored in the working device 12 before they return to the company.

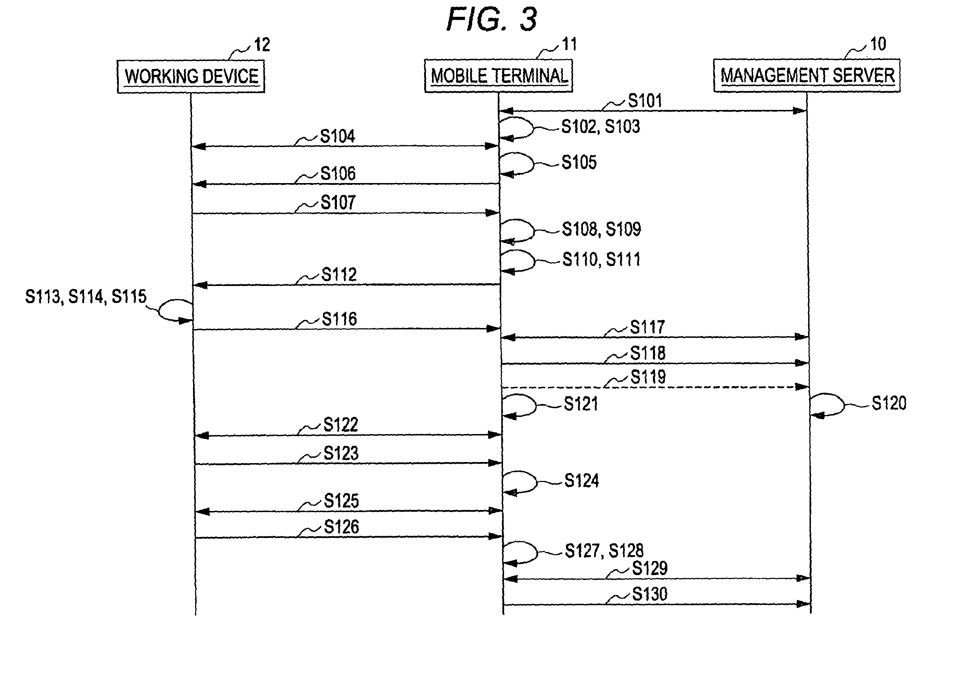

FIG. 3 illustrates a process sequence of the data management system 1 of when the maintenance worker performs system maintenance work using work procedure manual data as management object data. A procedure proceeds to Operation S101, and the maintenance worker connects the mobile terminal 11 to the management server 10 through the wireless LAN, before going out to perform system maintenance work. The mobile terminal 11 transmits a management object data acquisition request to the management server 10 and downloads the work procedure manual data returned as a response thereof in its terminal.

A body of document data and disclosure condition data are integrated with each other in the work procedure manual data. A management of the body of the document data when the mobile terminal 11 is not connected to the management server 10 (during an off-line state) is defined in the disclosure condition data.

The procedure proceeds to Operation S102, and the mobile terminal 11 that has downloaded the work procedure manual data from the management server 10 analyzes the disclosure condition data that is added to the work procedure manual data and recognizes, for example, content encryption and regular communication (within two hours) as a security function to be activated in its terminal.

Meanwhile, the disclosure condition data is individually defined for every management object data. For example, only the content encryption is designated in a "component code table" document that is simultaneously used in the system maintenance work, since an importance degree of the document is low. In order to realize the content encryption and the regular communication (within two hours), the mobile terminal 11 performs setting to execute a reservation task in which the mobile terminal 11 is connected to the management server 10 after 1 hour 50 minutes from a current time and transmits the accumulated data management record.

The procedure proceeds to Operation S103, and the maintenance worker who visits the office of the customer carrying the mobile terminal 11 performs work for transmitting the work procedure manual data stored in the mobile terminal 11 to the carried working device 12.

The mobile terminal 11 and the working device 12 each include a Bluetooth communication interface. The procedure proceeds to Operation S104, and the mobile terminal 11 and the working device 12 perform mutual authentication through the wireless communication, fix a peer-to-peer local communication path, and are locally connected to each other.

The procedure proceeds to Operation S105, and the maintenance worker selects a "transmission of an electronic book" from a work menu on the mobile terminal 11 and displays a list of transmission object candidates. The maintenance worker selects the "work procedure manual" from the displayed transmission object candidates, and instructs a transmission.

When the transmission of the work procedure manual is instructed, the procedure proceeds to Operation S106, and the mobile terminal 11 transmits a security specification acquisition request to the working device 12. The procedure proceeds to Operation S107, and the working device 12 returns the held security specification data to the mobile terminal 11 in accordance with the security specification acquisition request.

In the security specification data, a maker of the working device 12 may attach a digital signature. The procedure proceeds to Operation S108, and the mobile terminal 11 uses a digital certificate of the maker that is previously installed in its terminal, thereby verifying that a false specification is not described in the security specification data.

In the security specification, a device ID to identify an individual of the working device 12, and a list of security functions that can be activated in the working device 12 are described. Examples for the security functions are, content encryption, an automatic erasure timer (minute unit), erasure timer extension authentication, and regular user authentication are included.

The procedure proceeds to Operation S109, and the mobile terminal 11 that has received the security specification determines whether the working device 12 has a required security function so that the work procedure manual can be transmitted, based on the disclosure condition and the security specification.

When it is determined that the working device 12 does not have the required security function for the work procedure manual to be transmitted, the procedure proceeds to Operation S110, and the mobile terminal 11 stops a transmitting process of the work procedure manual data, and displays a transmission error to warn the maintenance worker. Meanwhile, when it is determined that the working device 12 has the required security function so that the work procedure manual can be transmitted, the procedure proceeds to Operation S111. At Operation S111, the mobile terminal 11 selects the needed security function based on the security specification of the working device 12 and the disclosure condition data of the work procedure manual data and creates data management contract data.

After the data management contract data is created, the procedure proceeds to Operation S112, and the mobile terminal 11 starts to transmit the work procedure manual data. In Operation S112, the data management contract data that is applied by the mobile terminal 11 is included in the work procedure manual data that is transmitted from the mobile terminal 11 to the working device 12, in addition to the body of the document data.

The procedure proceeds to Operation S113, and the working device 12 acquires the data management contract data that is applied to the work procedure manual data. Then, the procedure proceeds to Operation S114, and the working device 112 analyzes the data management contract data that is applied to the work procedure manual data.

In this case, it is assumed that content encryption and an automatic erasure timer is configured with 60 minutes are set. The set data management contract instructs the working device 12 to encrypt the transmitted work procedure manual data and hold the encrypted work procedure manual data in the working device 12. The set data management contract also instructs the working device 12 to automatically erase the work procedure manual data after 60 minutes from the transmission.

The working device 12 can prevent information from leaking if the security functions are activated, even when the working device was theft during the work, because the work procedure manual data is encrypted and automatically erased after 60 minutes from the transmission.

The procedure proceeds to Operation S115, and the working device 12 internally activates the security function that is set in the data management contract data. The procedure proceeds to Operation S116, and the working device 12 returns successful activation of the security function as data management contract confirmation data to the mobile terminal 11.

If the transmission of the work procedure manual is completed, the maintenance worker selects "disconnect a local connection" from the work menu on the mobile terminal 11, and separates the working device 12 from the mobile terminal 11.

Then, the procedure proceeds to Operation S117, and the mobile terminal 11 is connected to the management server 10 through a dial-up line. Then, the procedure proceeds to Operation S118, and the mobile terminal 11 reports the transmission of the work procedure manual data to the working device 12 and the data management contract confirmation data received from the working device 12 as a data management record.

The mobile terminal 11 compares an bult-in clock and a final accessed time of the previous connection with the management server 10. If the mobile terminal 11 determines that it is not passed less than 2 hours (for example, in the case of 1 hour 50 minutes passed) from the regular communication passes, the procedure proceeds to Operation S119. At Operation S119, the mobile terminal 11 performs connection to the management server 10 even when the work procedure manual data is not transmitted, and reports that the disclosure condition is conformed. Further, the notification of Operation S119 is performed based on the "regular communication (within two hours)" that is described in the disclosure condition data. Then, the procedure proceeds to Operation S120, and the management server 10 confirms that the disclosure condition is conformed, based on the notifications of Steps S118 and S119.

The procedure proceeds to Operation S121, and the mobile terminal 11 updates the final access time, when the connection to the management server 10 has succeeded. The mobile terminal 11 disconnects the connection with the management serve 10 until communication with the management server 10 is needed.

The maintenance worker proceeds with the maintenance work while inputting necessary information to an input form portion of the work procedure manual stored in the working device 12. If the work is completed, the procedure proceeds to Operation S122, and the maintenance worker returns to the locker room again, and locally connects the working device 12 to the mobile terminal 11 again.

Then, the procedure proceeds to Operation S123, and the working device 12 transmits the data management record to the mobile terminal 11. In this case, it is assumed that abnormal circumstances are not generated during the work. In the data management record that is transmitted to the mobile terminal 11, a fact that the form data inputs are entered in the work procedure manual during the maintenance work, and a time when the work is completed are recorded.

If the reception of the data management record is confirmed, the procedure proceeds to Operation S124, and the maintenance worker operates the mobile terminal 11 and selects an erasure of the work procedure manual data from the operation menu. Then, the procedure proceeds to Operation S125, and the mobile terminal 11 transmits a safety action request (erasure) to the working device 12 through the local connection.

Then, the procedure proceeds to Operation S126, and the working device 12 erases the work procedure manual data, and returns a data management record reporting that the work procedure manual data is completely erased to the mobile terminal 11. Then, the procedure proceeds to Operation S127, and the maintenance worker confirms a confirmation message of the erasure completion displayed on the mobile terminal 11. The maintenance worker disconnects the local connection between the mobile terminal 11 and the working device 12.

Then, the procedure proceeds to Operation S128, and the mobile terminal 11 detects cutting of the local connection with the working device 12. Then, the procedure proceeds to Operation S129, and the mobile terminal 11 is connected to the management server 10 by the dial-up line. Then, the procedure proceeds to Operation S130, and the mobile terminal 11 collects a series of data management records received from the working device 12 and transmits the data management records to the management server 10.

Hereinafter, the process sequence illustrated in FIG. 3 will be described in more detail. The process sequence illustrated in FIG. 3 includes a security specification acquiring process, a data transmitting process, and a data erasing process.

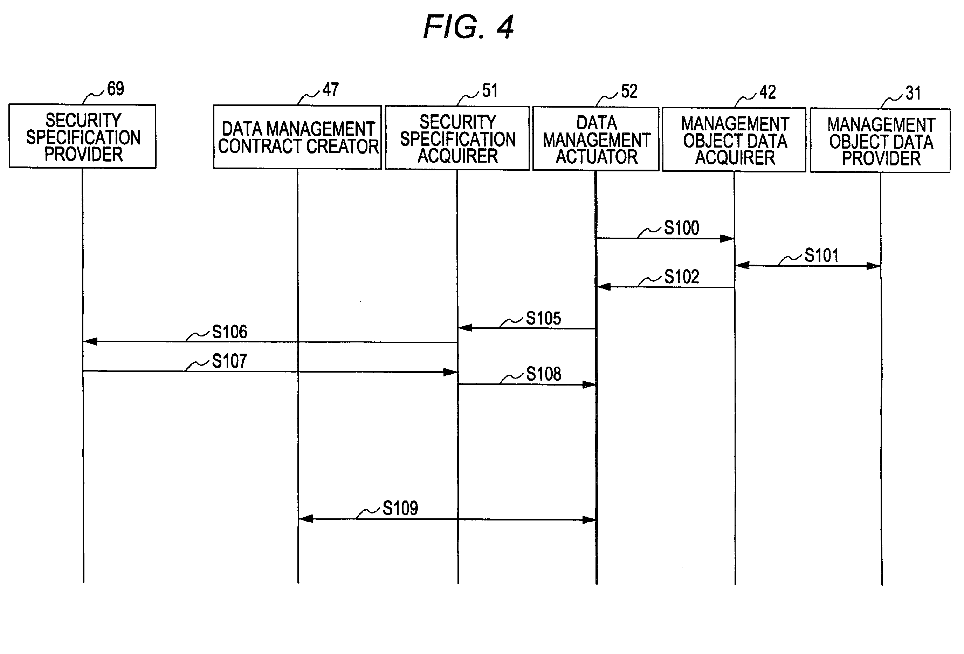

FIG. 4 illustrates a process sequence of a security specification acquiring process. In the process sequence illustrated in FIG. 4, the same Steps as those in the process sequence illustrated in FIG. 3 are denoted by the same Operation numbers.

If the maintenance worker performs an operation designating to download the work procedure manual data with respect to the mobile terminal 11, the procedure proceeds to Operation S100. At Operation S100, the data management actuator 52 instructs the management object data acquirer 42 to acquire the work procedure manual data from the management server 10. Then, the procedure proceeds to Operation S101, and the management object data acquirer 42 is connected to the management object data provider 31 of the management server 10 through the wireless LAN. The management object data acquirer 42 transmits a work procedure manual data acquisition request to the management object data provider 31 of the management server 10, and acquires the work procedure manual data returned as a response thereof. Then, the procedure proceeds to Operation S102, and the management object data acquirer 42 transmits the acquired work procedure manual data to the data management actuator 52.

The data management actuator 52 analyzes the disclosure condition data that is added to the work procedure manual data, and recognizes a security function to be activated in its terminal. The data management actuator 52 performs setting to execute a reservation task so as to satisfy the disclosure condition. The local connection receiver 41 of the mobile terminal 11 and the local connection requester 64 of the working device 12 perform mutual authentication through the wireless communication, fix a peer-to-peer local communication path, and are locally connected to each other.

When the maintenance worker selects the work procedure manual from the transmission object candidates and instructs a transmission, the procedure proceeds to Operation S105, and the data management actuator 52 of the mobile terminal 11 instructs the security specification acquirer 51 to acquire a security specification.

Then, the procedure proceeds to Operation S106, and the security specification acquirer 51 transmits a security specification acquisition request to the security specification provider 69 of the working device 12.

Then, the procedure proceeds to Operation S107, and the security specification provider 69 returns the held security specification data with respect to the security specification acquisition request from the security specification acquirer 51 of the mobile terminal 11.

Then, the procedure proceeds to Operation S108, and the security specification acquirer 51 transmits the acquired security specification data to the data management actuator 52. The data management actuator 52 uses the digital certificate of the maker that is previously installed in its terminal, thereby verifying that a false specification is not described in the security specification data.

Then, the procedure proceeds to Operation S109, and the data management actuator 52 instructs the data management contract creator 47 to create a data management contract. The data management contract creator 47 determines whether the working device 12 has a required security function so that the work procedure manual can be transmitted, based on the disclosure condition and the security specification.

If it is determined that the working device 12 does not have the required security function for the work procedure manual to be transmitted, the data management contract creator 47 stops a transmitting process of the work procedure manual data, displays a transmission error, and warns the maintenance worker. Meanwhile, if it is determined that the working device 12 has the required security function so that the work procedure manual can be transmitted, the data management contract creator 47 selects the needed security function based on the security specification data of the working device 12 and the disclosure condition data of the work procedure manual data, and creates data management contract data.

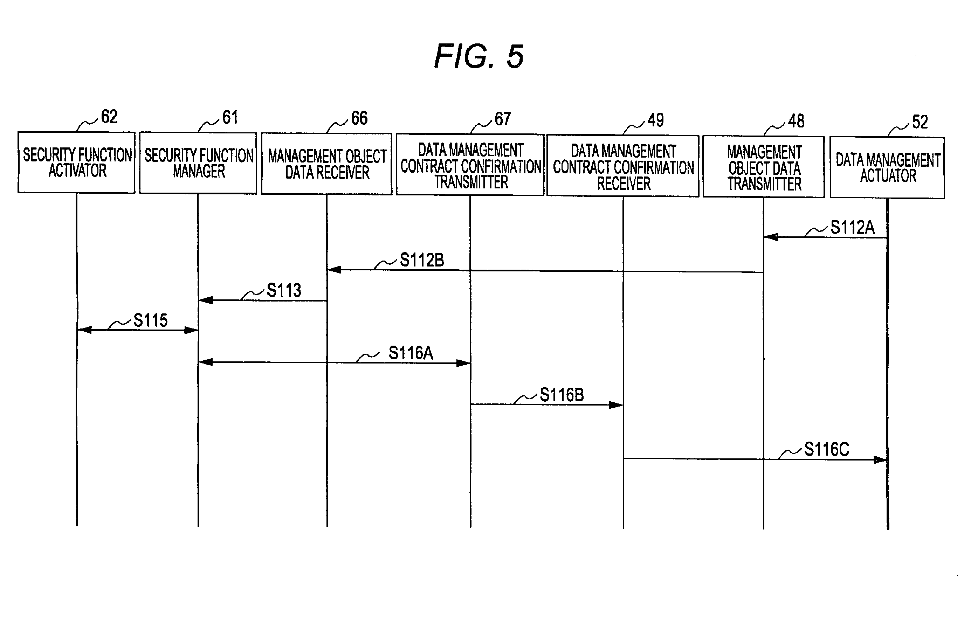

FIG. 5 illustrates a sequence of a data transmitting process. In the sequence illustrated in FIG. 5, the same operations as those in the process sequence illustrated in FIG. 3 are denoted by the same Operation numbers.

After the data management contract data is created, the procedure proceeds to Operation S112A. At Operation S112A, the data management actuator 52 of the mobile terminal 11 requests the management object data transmitter 48 to transmit management object data. Then, the procedure proceeds to Operation S112B, and the management object data transmitter 48 transmits the work procedure manual data to the management object data receiver 66 of the working device 12.

Then, the procedure proceeds to Operation S113, and the security function manager 61 of the working device 12 acquires the data management contract data that is applied to the work procedure manual data. The security function manager 61 analyzes the data management contract data that is applied to the work procedure manual data.

The procedure proceeds to Operation S115, and the security function activator 62 internally activates the security function that is set in the data management contract data, based on the analysis of the data management contract data by the security function manager 61. The procedure proceeds to Operation S116A, and the security function manager 61 notifies the data management contract confirmation transmitter 67 of the successful activation of the security function.

Then, the procedure proceeds to Operation S116B, and the data management contract confirmation transmitter 67 returns the successful activation of the security function as the data management contract confirmation data to the data management contract confirmation receiver 49 of the mobile terminal 11. Then, the procedure proceeds to Operation S116C, and the data management contract confirmation receiver 49 transmits the data management contract confirmation data to the data management actuator 52.

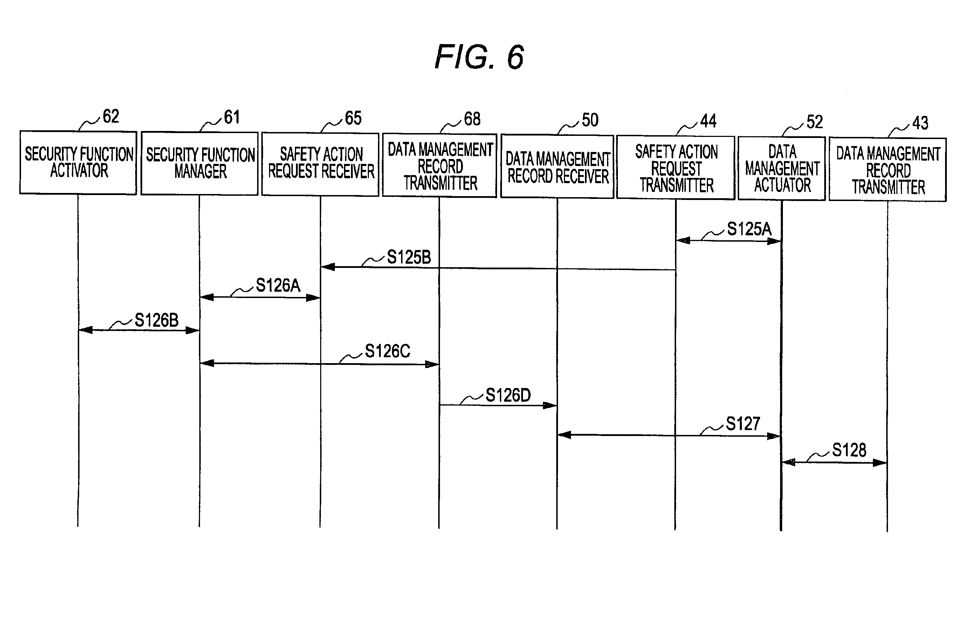

FIG. 6 illustrates a sequence of a data erasing process. The procedure proceeds to Operation S125A, and the data management actuator 52 instructs the safety action request transmitter 44 to execute a safety action (erasure). Then, the procedure proceeds to Operation S125B, and the safety action request transmitter 44 transmits the safety action request (erasure) to the safety action request receiver 65 of the working device 12 through the local connection.

Then, the procedure proceeds to Operation S126A, and the safety action request receiver 65 requests the security function manager 61 to erase the work procedure manual data. Then, the procedure proceeds to Operation S126B, and the security function manager 61 requests the security function activator 62 to erase the work procedure manual data. The security function activator 62 uses the security function to erase the work procedure manual data.

Then, the procedure proceeds to Operation S126C, and the security function manager 61 notifies the data management record transmitter 68 that the work procedure manual data is completely erased. Then, the procedure proceeds to Operation S126D, and the data management record transmitter 68 returns a data management record reporting that the work procedure manual data is completely erased to the data management record receiver 50 of the mobile terminal 11.

Then, the procedure proceeds to Operation S127, and the data management record receiver 50 transmits the data management record reporting that the work procedure manual data is completely erased to the data management actuator 52. The data management actuator 52 displays a confirmation message of the erasure completion on the mobile terminal 11. When the data management actuator 52 detects cutting of the local connection with the working device 12, the procedure proceeds to Operation S128, and the data management actuator 52 instructs the data management record transmitter 43 to transmit the data management record.

After the process of Operation S128, if the data management record transmitter 43 is connected to the management server 10 through the dial-up line, the data management record transmitter 43 collects a series of data management records received from the working device 12 and transmits the data management records to the data management record receiver 32 of the management server 10.

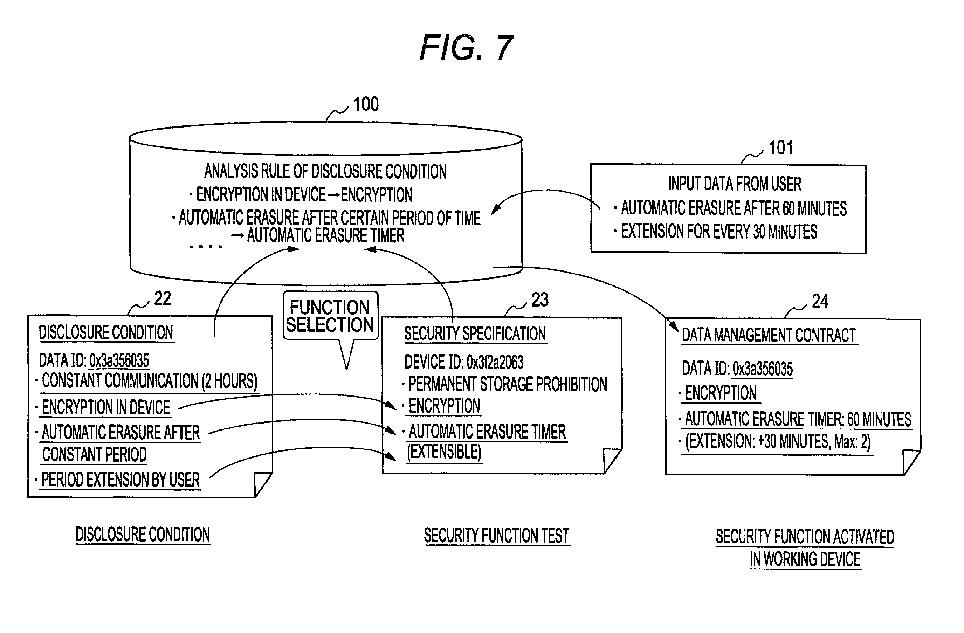

Next, creation of the data management contract that is performed by the data management contract creator 47 of the mobile terminal 11 will be described. FIG. 7 illustrates a data management contract creating process that is executed by a data management contract creator.

The data management contract creator 47 acquires a list of security functions of the working device 12 from the working device 12 as the security specification 23. In the list of security functions illustrated in FIG. 7, "permanent storage prohibition", "encryption", and an "automatic erasure timer (extensible)" are included as the security functions.

Further, the data management contract creator 47 refers to an analysis rule 100 of the disclosure condition, and lists up security functions that are needed to meet the disclosure condition 22. For example, in the analysis rule 100 of the disclosure condition illustrated in FIG. 7, security functions that are needed to meet a certain disclosure condition are recorded, like "encryption in a device → encryption" and "automatic erasure after a certain period of time → automatic erasure timer".

In addition, the data management contract creator 47 collates the list of security functions needed to meet the disclosure condition 22 and the list of security functions of the working device 12. The data management contract creator 47 selects the security function that is needed in the disclosure condition 22. At this time, the data management contract creator 47 acquires a short setting parameter as input data 101 from a user. In the example illustrated in FIG. 7, as the input data 101 from the user, "automatic erasure after 60 minutes" and "extension for every 30 minutes" are acquired.

The data management contract creator 47 adds the input data 101 from the user to the security function needed in the selected disclosure condition 22 and creates a data management contract 24. In the data management contract 24 illustrated in FIG. 7, "encryption" and an "automatic erasure timer" are set as the security functions that are activated in the working device 12.

Further, in the data management contract 24 illustrated in FIG. 7, "automatic erasure after 60 minutes" and "extension for every 30 minutes, two times to the maximum" are set in the security function "automatic erasure timer". As illustrated in FIG. 7, the data management contract creator 47 can create a data management contract 24 from a disclosure condition 22, a security specification 23, input data 101 from a user, and an analysis rule 100 of a disclosure condition.

[Second Embodiment]

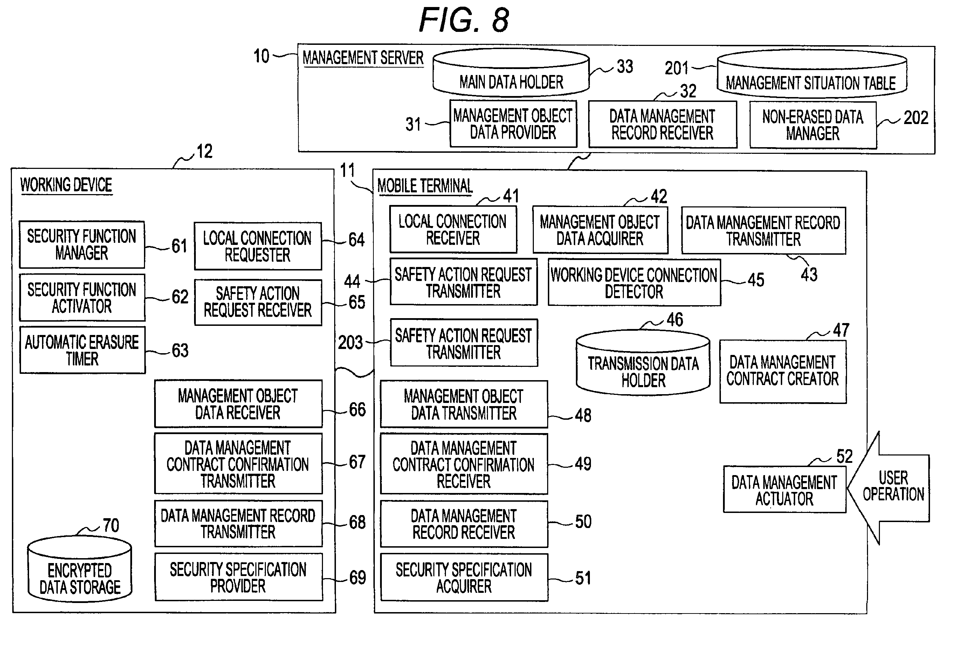

FIG. 8 illustrates the configuration of a data management system according to a second embodiment. The data management system 1 according to the second embodiment has the same configuration as the data management system 1 according to the first embodiment, except for a portion of the configuration. Accordingly, the same components will be denoted by the same reference numerals and the repetitive description will be appropriately omitted.

The management server 10 that is included in the data management system 1 according to the second embodiment includes a management situation table 201 and a not-erased data manager 202 in addition to the configuration of the management server 10 that is included in the data management system 1 according to the first embodiment. Further, the mobile terminal 11 that is included in the data management system 1 according to the second embodiment includes a safety action request transmitter 203 in addition to the configuration of the mobile terminal 11 that is included in the data management system 1 according to the first embodiment.

When the management server 10 according to the second embodiment transmits management object data to the mobile terminal 11, the management server 10 registers an entry where a data ID to identify the management object data and a disclosure condition applied at the time of transmission are configured as a group in the management situation table 201.

Further, when the management server 10 according to the second embodiment receives a data management contract confirmation from the mobile terminal 11, the management server 10 registers records of a contract ID to identify a data management contract acquired from the data management contract confirmation and a reception time of the data management contract confirmation in a corresponding entry of the management situation table 201.

Thereafter, when the work is normally completed, the mobile terminal 11 transmits a safety action request to erase the management object data to the working device 12. The mobile terminal 11 receives a data management record where an erasure execution of the corresponding management object data is recorded from the working device 12, as a response for the safety action request. The data management record is transmitted to the management server 10 through the mobile terminal 11.

When the erasure of the management object data is included in the data management record that is transmitted to the management server 10, the not-erased data manager 202 transmits the data management record. The not-erased data manager 202 refers to the transmitted data management record and records the erasure of the corresponding management object data in the management situation table 201.

Further, when the erasure of the management object data from the mobile terminal 11 is recorded in the data management record that is received from the mobile terminal 11, the not-erased data manager 202 deletes an entry of the corresponding management object data from the management situation table 201.

The not-erased data manager 202 investigates all of the entries in the management situation table 201 for every predetermined time. If the not-erased data manager 202 detects the entry of the management object data that exceeds an available period described in the recorded disclosure condition, the not-erased data manager 202 transmits a safety action request to the safety action request transmitter 203 of the mobile terminal 11.

The safety action request transmitter 203 transmits the safety action request instructing to erase the management object data to the safety action request receiver 65 of the working device 12. When the erasure execution of the corresponding management object data is recorded in the data management record, the not-erased data manager 202 deletes the entry of the corresponding management object data from the management situation table 201, as a response for the safety action request.

If the safety action (erasure of the management object data) is not executed in the working device 12 or the mobile terminal 11, in the data management system 1 according to the second embodiment, the safety action request is transmitted by the function of the not-erased data manager 202 of the management server 10, thereby securely erasing the corresponding management object data.

Here, as an example of the data management system 1 according to the second embodiment, a data management system 1 that supports system maintenance qwork will be described. Further, the data management system 1 according to the second embodiment partially extends the safety action of the data management system 1 according to the first embodiment, and prevents the work procedure manual from remaining in the mobile terminal 11 or the working device 12 after the work is completed.

Since the processes of Steps S101 to S130 in the data management system 1 according to the first embodiment illustrated in FIG. 3 are equally executed in the data management system 1 according to the second embodiment, reference is made to FIG. 3, with reference numerals of Steps S 101 to S 130 illustrated in FIG. 3 being changed to Steps S201 to S230, respectively.

In addition to the configuration of the management server 10 of the data management system 1 according to the first embodiment, the management server 10 of the data management system 1 according to the second embodiment includes a management situation table 201 that accumulates the data management records notified from the mobile terminal 11 and a not-erased data manager 202 that detects management object data, which is not erased in the management situation table 201, and transmits a safety action request (erasure) to the mobile terminal 11.

In addition to the configuration of the mobile terminal 11 of the data management system 1 according to the first embodiment, the mobile terminal 11 of the data management system 1 according to the second embodiment includes a safety action request transmitter 203 that temporarily holds the safety action request transmitted from the management server 10, and transmits the safety action request to the working device 12, when the working device 12 is connected.

In the data management system 1 according to the second embodiment, when the work procedure manual data is downloaded to the mobile terminal 11 in Operation S201, the not-erased data manager 202 of the management server 10 records an instance number "1" in the management situation table 201. The instance number is incremented whenever the management server 10 receives the data management record reporting the transmission of the management object data to the working device 12, which is transmitted from the mobile terminal 11, in Operation S218. Further, the instance number is decremented whenever the management server 10 receives the data management record reporting the erasure of the management object data from the working device 12, which is transmitted from the mobile terminal 11, in Operation 5230.

In addition, when the mobile terminal 11 is connected to the management server 10 for a regular report, the not-erased data manager 202 inspects the management situation table 201. When the instance number becomes a value other than "1", the not-erased data manager 202 investigates the accumulated data management records and detects the not-erased management object data due to a work miss, the not-erased data manager 202 transmits the safety action request to the mobile terminal 11.

Here, the transmitted safety action request needs to be transmitted from the safety action request transmitter 203 to the working device 12, when the mobile terminal 11 is connected to the working device 12 again. Accordingly, the mobile terminal 11 that has received the safety action request preferably has the display device to display a message to urge the maintenance worker to connect to the working device 12 again.

The data management system 1 according to the second embodiment can prevent the occurrence of the case in which the maintenance worker erroneously executes the process sequence and the management object data remains in the working device 12.

[Third Embodiment]

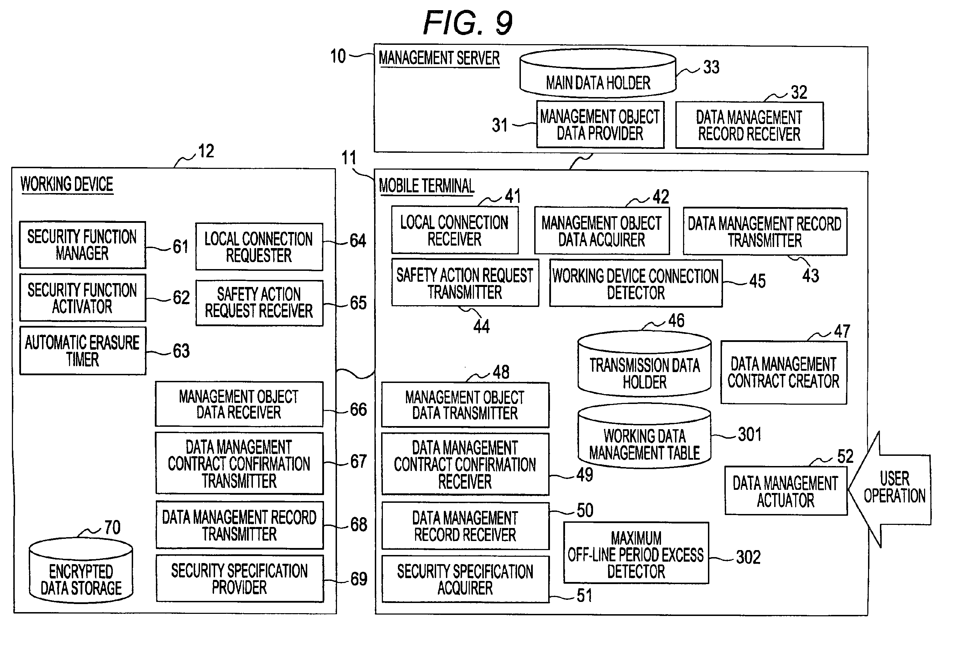

FIG. 9 illustrates the configuration of a data management system according to a third embodiment. The data management system 1 according to the third embodiment has the same configuration as the data management system 1 according to the first embodiment, except for a portion of the configuration. Accordingly, the same components will be denoted by the same reference numerals and the repetitive description will be appropriately omitted.

The mobile terminal 11 that is included in the data management system 1 according to the third embodiment includes a working data management table 301 and a maximum off-line period excess detector 302 in addition to the configuration of the mobile terminal 11 that is included in the data management system 1 according to the first embodiment.

When a "maximum off-line period" is set in a disclosure condition of the management object data that is transmitted to the working device 12, the mobile terminal 11 according to the third embodiment accumulates a maximum off-line period of the management object data in the working data management table 301. If the working device 12 exceeds a maximum off-line time after cutting the local connection, the mobile terminal 11 transmits a data management record where a maximum off-line period passage event is recorded to the management server 10.

Further, when the working device 12 that has completed the work performs the local connection with the mobile terminal 11 again, the maximum off-line period excess detector 302 of the mobile terminal 11 detects an excess of the maximum off-line period. When the maximum off-line period excess detector 302 detects the excess of the maximum off-line period, the safety action request transmitter 44 of the mobile terminal 11 transmits a safety action request to the safety action request receiver 65 of the working device 12 instructing it to immediately erase the management object data.

The data management record receiver 50 receives the data management record where an erasure execution of the management object data is recorded from the data management record transmitter 68 of the working device 12. Further, the data management record transmitter 43 of the mobile terminal 11 transmits the data management record, which is received from the working device 12, to the data management record receiver 32 of the management server 10.

The data management system 1 according to the third embodiment can detect abnormal circumstances where communication with the working device 12 transmitting the management object data is interrupted, by the function of the maximum off-line period excess detector 302 of the mobile terminal 11.

Further, when the working device 12 is connected to the mobile terminal 11 again after reporting the maximum off-line period excess to the management server 10, the mobile terminal 11 transmits a safety action request to execute the safety action to the working device 12 to erase the management object data from the working device 12. The mobile terminal 11 receives a data management record as a confirmation of the erasure of the management object data, thereby confirming that the management object data is securely erased and does not leak.

Here, as an example of the data management system 1 according to the third embodiment, a data management system 1 that supports system maintenance work will be described. The data management system 1 according to the third embodiment can partially extend the safety action of the data management system 1 according to the first embodiment, and can report an abnormality to the management server 10 when the mobile terminal does not return at a reconnection time assumed by the working device 12.

Since the processes of Steps S101 to S130 in the data management system 1 according to the first embodiment illustrated in FIG. 3 are equally executed in the data management system 1 according to the third embodiment, reference is made to FIG. 3, with reference numerals of Steps S101 to S130 illustrated in FIG. 3 being changed to Steps S301 to S330, respectively.

In addition to the configuration of the mobile terminal 11 according to the first embodiment, the mobile terminal 11 of the data management system 1 according to the third embodiment includes a working data management table 301 that manages working management object data transmitted to the working device 12, and a maximum off-line period excess detector 302 that detects when the working device 12 excesses a maximum off-line period and becomes an off-line state, based on a final access time recorded in the working data management table 301 and a maximum off-line period described in disclosure condition data.

The data management system 1 according to the third embodiment downloads the management object data from the management server 10 in Operation 5301. In a disclosure condition of the downloaded management object data, a "maximum off-line period (120 minutes) is described, in addition to the disclosure condition set in Operation S101.

In addition to the process of when the local connection between the mobile terminal 11 and the working device 12 is cut in Operation S116, in Operation S316, if the working device 12 is not connected again within 120 minutes using a current time as an origination, the working device 12 determines that abnormal circumstances are generated, and executes a process of reporting the excess of the maximum off-line period to the management server 10 by the transmission of the data management record. By the transmission of the data management record, the management server 10 can detect the possibility of abnormal circumstances such as the theft of the working device 12 being generated.

Meanwhile, when the working device 12 is connected again after transmitting the data management record reporting the excess of the maximum off-line period, the safety action request (erasure) is transmitted from the mobile terminal 11 to the working device 12, and the data management record that reports the erasure of the management object data is returned from the working device 12 in accordance with the safety action request (erasure).

Further, in the data management system 1 according to the third embodiment, since the automatic erasure timer (60 minutes) is simultaneously designated, the same action can be expected even when the safety action request is not transmitted from the mobile terminal 11 to the working device 12. By the action, in the management server 10, the management object data reported as the abnormal circumstances through the mobile terminal 11 is erased from the working device 12, and a risk of information leakage is removed.

[Fourth Embodiment]

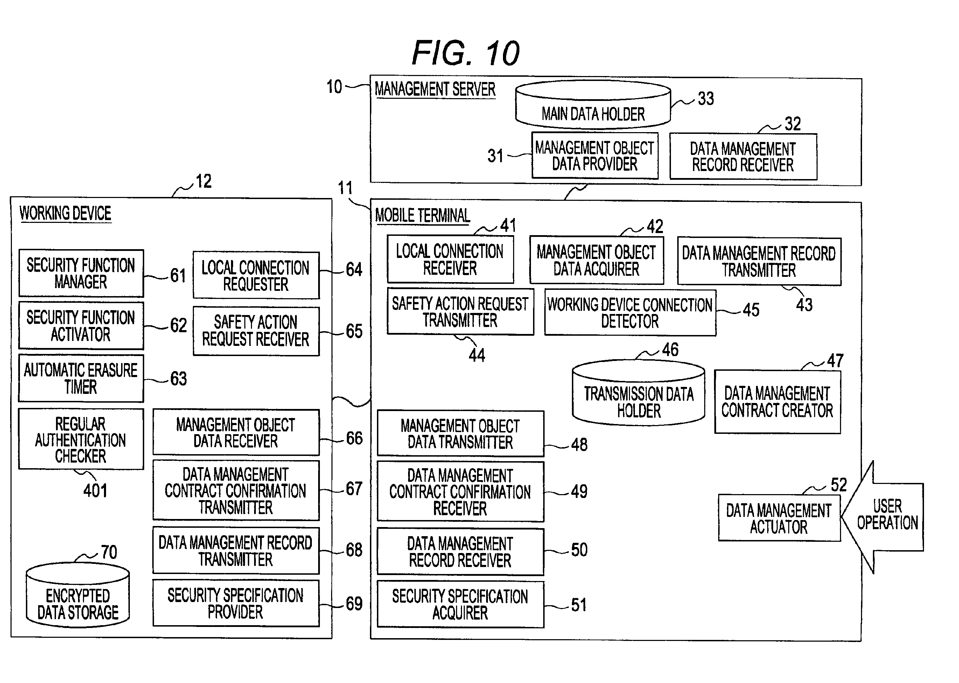

FIG. 10 illustrates the configuration of a data management system according to a fourth embodiment. The data management system 1 according to the fourth embodiment has the same configuration as the data management system 1 according to the first embodiment, except for a portion of the configuration. Accordingly, the same components will be denoted by the same reference numerals and the repetitive description will be appropriately omitted.

The working device 12 that is included in the data management system 1 according to the fourth embodiment includes a periodically authentication checker 401, in addition to the configuration of the working device 12 that is included in the data management system 1 according to the first embodiment.

The execution of the periodically user authentication is set in the disclosure condition of the management object data, and having a "periodically authentication check" verifying that the periodically maintenance worker performs works for every certain period of time as a security function is described in the security specification of the working device 12. In this case, a data management contract where activation of the "periodically authentication check" is designated is applied to the management object data that is transmitted from the management object data transmitter 48 of the mobile terminal 11 to the working device 12.

The working device 12 that has received the management object data activates the periodically authentication checker 401 in accordance with the designation of the security function in the data management contract, and requests a user authentication of the maintenance worker by the periodically authentication checker 401, whenever the constant time passes. When the maintenance worker does not pass the user authentication by the periodically authentication checker 401, the working device 12 executes the safety action that is designated to the data management contract.

When the safety action is executed, the working device 12 records the execution of the safety action in the data management record. The data management record where the execution of the safety action is recorded is transmitted to the management server 10 through the mobile terminal 11, when the working device 12 is connected to the mobile terminal 11 again.

By the function of the periodically authentication checker 40 of the working device 12, the data management system 1 according to the fourth embodiment can periodically confirm that the maintenance worker is not away from the working device 12. When the maintenance worker does not exist or an authentication has failed due to an operation by an unqualified user, the data management system 1 erases the management object data, thereby preventing an illegal access to the management object data.

Here, as an example of the data management system 1 according to the fourth embodiment, a data management system 1 that supports system maintenance work will be described. The data management system 1 according to the fourth embodiment partially extends the safety action of the data management system 1 according to the first embodiment, and reports abnormality to the management server 10, when the mobile terminal does not return at a reconnection time assumed by the working device 12.

Since the processes of Steps S101 to S130 in the data management system 1 according to the first embodiment illustrated in FIG. 3 are equally executed in the data management system 1 according to the fourth embodiment, reference is made to FIG. 3, with reference numerals of Steps S101 to S130 illustrated in FIG. 3 being changed to Steps S401 to S430, respectively.

In the configuration of the working device 12 of the data management system 1 according to the first embodiment, the working device 12 of the data management system 1 according to the fourth embodiment includes a periodically authentication checker 401 that performs a user authentication by an input of a password, whenever the certain period of time passes.

The data management system 1 according to the fourth embodiment downloads the management object data from the management server 10, in Operation S401. In a disclosure condition of the downloaded management object data, a "periodically user authentication (for every 30 minutes)" is set, in addition to the disclosure condition set in Operation S101.

In this case, in Operation S411, data management contract data where the "periodically user authentication (for every 30 minutes)" is included is created. In a state where the data management contract data is received, in Steps S414 and S415, setting is made to activate the periodically authentication checker 401 as the security function of the working device 12 and requests the user authentication of the maintenance worker for every 30 minutes.

Further, in the data management contract confirmation data of Operation S416, activation of the periodically authentication checker 401 is reported. As a result, during the work using the working device 12 by the maintenance worker after the working device 12 is separated from the mobile terminal 11, a prompt screen requiring a password input is displayed on the display device of the working device 121, whenever 30 minutes pass. In this case, the password input is only an example of the user authentication, and may be replaced by a fingerprint authentication where an authentication is more reliable and an operation is easy.

When the user authentication is succeeded made by the defined number of times or less, the working device 12 returns to a common operation state. Meanwhile, when the user authentication has failed, the working device 12 determines that the operation is made by the unqualified user, and automatically erases the management object data that is stored in the working device 12. Accordingly, the working device 12 can adjust to the case where the working device 12 is absconded with, while the maintenance worker has temporarily left the work site.

[Fifth Embodiment]

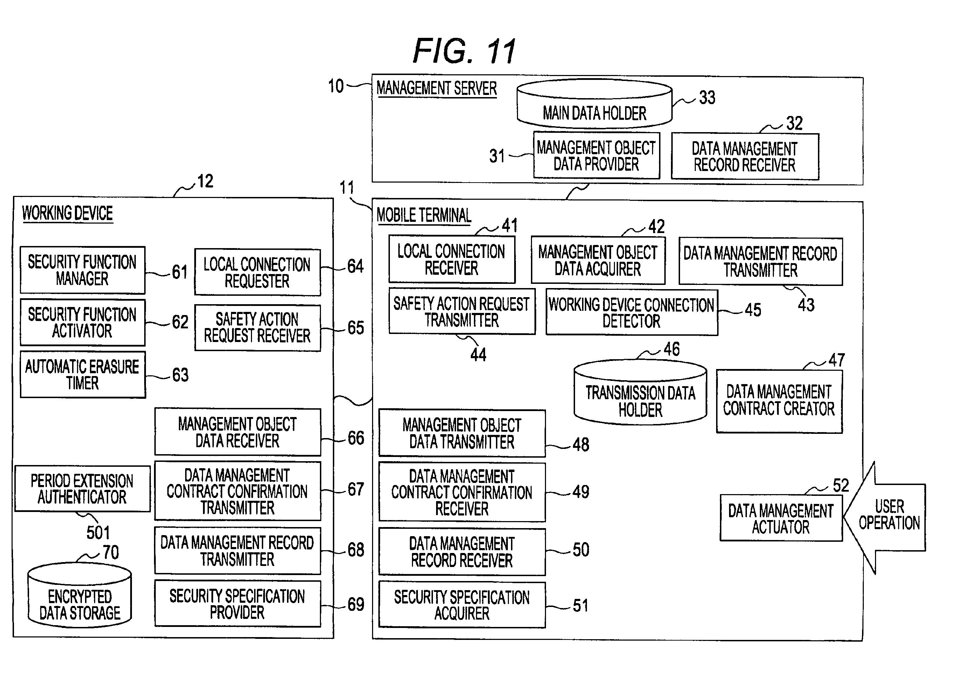

FIG. 11 illustrates the configuration of a data management system according to a fifth embodiment. The data management system 1 according to the fifth embodiment has the same configuration as the data management system 1 according to the first embodiment, except for a portion of the configuration. Accordingly, the same components will be denoted by the same reference numerals and the repetitive description will be appropriately omitted.

The working device 12 that is included in the data management system 1 according to the fifth embodiment includes a period extension authenticator 501, in addition to the configuration of the working device 12 that is included in the data management system 1 according to the first embodiment.

The automatic erasure after the constant period and a period extension authorization by the user are simultaneously designated in the disclosure condition of the management object data, and having an "automatic erasure timer" and a "extending erasure timer with authentication option" as security functions is described in the security specification of the working device 12. In this case, in the management object data that is transmitted form the management object data transmitter 48 of the mobile terminal 11 to the working device 12, a data management contract where activation of the "automatic erasure timer" and the "extending erasure timer with authentication option" is designated is applied.

The working device 12 that has received the management object data activates the automatic erasure timer 63 and the period extension authenticator 501 in the security function activator 62 in accordance with the designation of the security functions in the data management contract, performs the user authentication whenever a current time becomes a designation time designated to the automatic erasure timer, and performs a period extension of the designation time when the authentication is succeeded. When the authentication has failed, the working device 12 does not perform the period extension of the designation time and automatically erases the management object data.

By the function of the automatic erasure timer 63 of the working device 12, the data management system 1 according to the fifth embodiment ensures the erasure of the management object data after an available period determined in the disclosure condition applied to the management object data transmitted from the mobile terminal 11. By the function of the period extension authenticator 501, the data management system 1 extends the available period within a range defined by the disclosure condition, and can prevent the data needed for the work from being erased, even when the work time is delayed against the expectation.

Here, as an example of the data management system 1 according to the fifth embodiment, a data management system 1 that supports system maintenance work will be described.

The data management system 1 according to the fifth embodiment partially extends the safety action of the data management system 1 according to the first embodiment, and reports abnormality to the management server 10, when the mobile terminal does not return at a reconnection time assumed by the working device 12.

Since the processes of Steps S101 to S130 in the data management system 1 according to the first embodiment illustrated in FIG. 3 are equally executed in the data management system 1 according to the fifth embodiment, reference is made to FIG. 3, with reference numerals of Steps S101 to S130 illustrated in FIG. 3 being changed to Steps S501 to S530, respectively.

In addition to the configuration of the working device 12 of the data management system 1 according to the first embodiment, the working device 12 of the data management system 1 according to the fifth embodiment includes a period extension authenticator 501 that extends an erasure period, only when a user authentication passes, in the case of passing the erasure period by the automatic erasure timer 63.

The data management system 1 according to the fifth embodiment downloads the management object data from the management server 10 in Operation S501. In a disclosure condition of the downloaded management object data, a "allow period extension with authorization by a user (30 minutes and two times to the maximum)" is set, in addition to the disclosure condition set in Operation S101.

In this case, in Operation S511, data management contract data where the "allow period extension with authorization by the user (30 minutes and two times to the maximum)" is included is created. In a state where the data management contract data is received, in Steps S514 and S515, setting is made to activate the automatic erasure timer 63 and the period extension authenticator 501 as the security functions of the working device 12 and start the period extension authenticator 501 in the case of passing the erasure period by the automatic erasure timer 63.

Further, in the data management contract confirmation data of Operation S516, activation of the automatic erasure timer 63 and the period extension authenticator 501 is reported. As a result, during the work using the working device 12 by the maintenance worker after the working device 12 is separated from the mobile terminal 11, if 60 minutes as the erasure period of the automatic erasure timer 63 pass, a prompt screen that requires a password input is displayed on the display device of the working device 12.

When the user authentication is succeeded made by the defined number of times or less, the working device 12 can extend the erasure period of the automatic erasure timer 63 by 30 minutes. In the data management system 1 according to the fifth embodiment, the extension of the erasure period of the automatic erasure timer 63 is checked and it was not exceeded two times, and a period is extended by a maximum of 60 minutes.

Accordingly, if the working device 12 successfully performs the user authentication without being connected to the mobile terminal 11 again even in the case where the actual work time exceeds the scheduled work time, the working device 12 can extend the erasure period of the management object data. Further, as a supplementary effect, the working device 12 can extend the erasure period of the automatic erasure timer 63, and can minimize an information leakage risk by setting the erasure period of the authentic erasure timer 63 to be short.

[Sixth Embodiment]

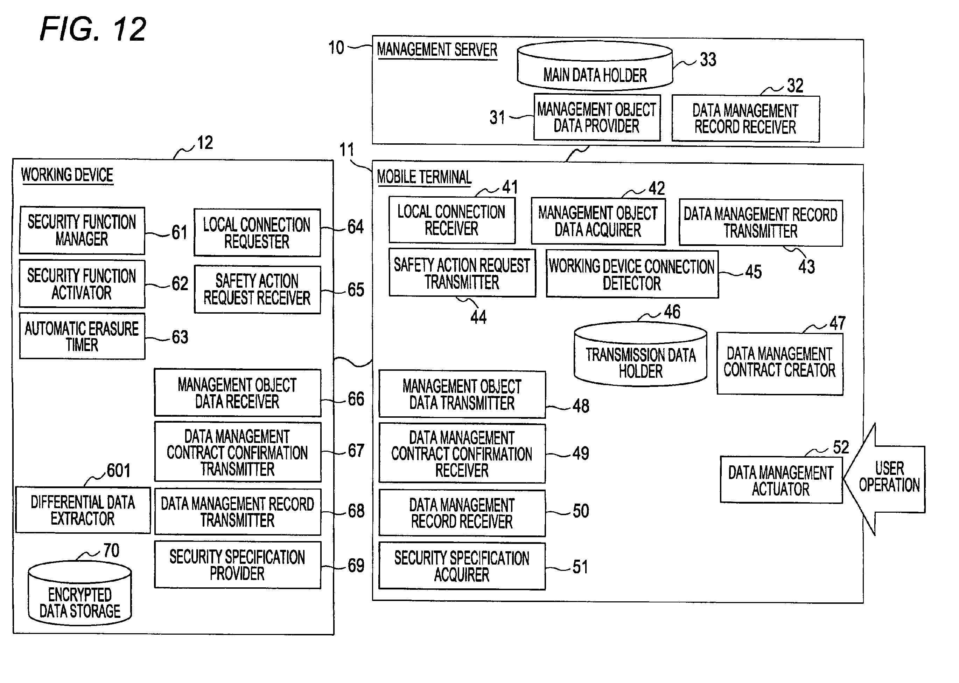

FIG. 12 illustrates the configuration of a data management system according to a sixth embodiment. The data management system 1 according to the sixth embodiment has the same configuration as the data management system 1 according to the first embodiment, except for a portion of the configuration. Accordingly, the same components will be denoted by the same reference numerals and the repetitive description will be appropriately omitted.

The working device 12 that is included in the data management system 1 according to the sixth embodiment includes a differential data extractor 601, in addition to the configuration of the working device 12 that is included in the data management system 1 according to the first embodiment.

When the working device 12 determines that the disclosure condition designated to the data management contract is not satisfied, the working device 12 executes the designated safety action. When the safety action is the erasure of the management object data, the working device 12 extracts changes that the maintenance worker applies to the management object data as differential data in the differential data extractor 601 first, and leave the differential data for future reference.

When the working device 12 is connected to the mobile terminal 11 again, the working device 12 transmits the data management record reporting the erasure of the management object data that includes the extracted differential data. The mobile terminal 11 that has received the differential data transmits a safety action request designating the erasure of the transmitted differential data to the working device 12. The working device 12 erases the differential data in accordance with the received safety action request, and returns a data management record confirming the erasure to the mobile terminal 11.

By the function of the differential data extractor 601 of the working device 12, the data management system 1 according to the sixth embodiment extracts the change point that the maintenance worker applies to the management object data and holds the change point, when executing the safety action with respect to the management object data in accordance with the disclosure condition. As a result, even though the body of the management object data is erased in order to prevent the information leakage, the work result can be restored by holding the changed contents during the work.

Here, as an example of the data management system 1 according to the sixth embodiment, a data management system 1 that supports the system maintenance work will be described. The data management system 1 according to the sixth embodiment partially extends the safety action of the data management system 1 according to the first embodiment, and holds the changed contents during the work, even though the management object data is erased by the function of the automatic erasure timer 63.

Since the processes of Steps S101 to S130 in the data management system 1 according to the first embodiment illustrated in FIG. 3 are equally executed in the data management system 1 according to the sixth embodiment, reference is made to FIG. 3, with reference numerals of Steps S 101 to S 130 ' illustrated in FIG. 3 being changed to Steps S601 to S630, respectively.

In addition to the configuration of the working device 12 of the data management system 1 according to the first embodiment, the working device 12 of the data management system 1 according to the sixth embodiment includes a differential data extractor 601 that extracts input form data that is additionally descried in the work procedure manual as the management object data during the maintenance work.

When the automatic erasure timer 63 operates in Steps S614 and 5615 and the work procedure manual data is erased, the data management system 1 according to the sixth embodiment uses the differential data extractor 601 to extract an input form portion of the work procedure manual data as differential data with the received work procedure manual data, excludes the differential data from the automatic erasure objects, and holds the differential data in the encrypted data storage 70.

In addition, in Operation S623, when the data management record is transmitted to the mobile terminal 11, by the function of the automatic erasure timer 63, the working device 12 transmits a data management record where the erasure of the work procedure manual data and the extracted differential data are recorded to the mobile terminal 11. The mobile terminal 11 couples the differential data such as the form input data received from the working device 12 to the management object data such as the work procedure manual stored in the terminal, thereby transmitting the work result to the management server 10.

(Effect of the data management system 1)

The data management system 1 securely realizes a data management in the working device 12 by a delegation of authority from the management server 10 to the mobile terminal 11. Specifically, in the mobile terminal 11, by the disclosure condition, monitoring to conform to the disclosure condition is enabled even in an off-line state with the management server 10. Further, the mobile terminal 11 can execute a safety action at the time of a deviation from the disclosure condition. Further, the mobile terminal 11 performs a periodically report with respect to the management server 10, and monitoring on the management server 10 is enabled.

The data management system 1 realizes a flexible data management through cooperation with the mobile terminal 11 and the working device 12. By using the security specification, the mobile terminal 11 can determine whether the working device 12 conforms to the disclosure condition. Further, when the mobile terminal 11 transmits the management object data to the working device 12, the mobile terminal 11 can confirm the disclosure condition that the working device 12 agrees. Further, the working device 12 can freely vary an access authorization to the management object data within a range of the disclosure condition.

As such, the data management system 1 can receive a report of a management in the case where the management object data is transmitted from the mobile terminal 11 to the working device 12 in an off-line state with the management server 10, and can extend the erasure period even when the actual work time exceeds the schedule work time. Accordingly, it is possible to facilitate a management of the management object data that is transmitted from the mobile terminal 11 to the working device 12 in an off-line state with the management server 10.

All examples and conditional language recited herein are intended for pedagogical purposes to aid the reader in understanding the principles of the invention and the concepts contributed by the inventor to furthering the art, and are to be construed as being without limitation to such specifically recited examples and conditions, nor does the organization of such examples in the specification relate to a showing of the superiority and inferiority of the invention.

Although a few preferred embodiments of the present invention have been shown and described, it would be appreciated by those skilled in the art that changes may be made in these embodiments without departing from the principles of the invention, the scope of which is defined in the appended claims

## Claims

1. A mobile terminal (11) which transmits management object data (21) to a working device (12), the mobile terminal (11) comprising:
a local connection receiver (41) that locally communicates with the working device (12) through wired communication or wireless communication;
a holder that holds management object data (21), disclosure condition information (22) of the management object data, and an analysis rule which is for analyzing the disclosure condition included in the disclosure information;
a security specification acquirer (51) that acquires security specification information (23) which indicates a security function of the working device (12);
a management object data transmitter (48) that transmits the management object data (21) with created data management contract information (24) to the working device (12); and
a data management record receiver (50) that receives the management record (26) of the management object data (21) from the working device (12), when the working device is locally re-connected through the local connection receiver (41); the mobile terminal (11) **characterized by** further comprising:
a data management contract creator (47) that creates the data management contract information (24) which indicates a contract of the management object data (21) of the working device (12), if it is determined that the working device satisfies the disclosure condition of the management object data, based on the security specification information (23) of the working device (12) receiving the management object data (21) and the disclosure condition information (22) of the management object data;
wherein the data management contract creator (47) is operable to acquire a first list of security functions of the working device (12) from the security specification information (23) of the working device receiving the management object data (21), create a second list of security functions needed to satisfy the disclosure condition of the management object data (21), from the disclosure condition information (22) of the management object data, based on the analysis rule of the disclosure condition, and create the data management contract information (24) which activates the security functions so that the disclosure condition of the management object data is satisfied of the first list and second list.

2. The mobile terminal (11) according to claim 1, further comprising:
a safety action request transmitter (44) that requests the working device (12) to erase the management object data (21), if a violation of the disclosure condition of the management object data transmitted to the working device is detected.

3. The mobile terminal (11) according to claim 1, further comprising:
a maximum off-line period excess detector (302) that transmits a warning message, if the working device (12) which has been transmitted the management object data (21) is not locally re-connected after a maximum off-line period has passed, wherein the maximum off-line period is set based on the disclosure condition of the management object data (21) transmitted to the working device (12).

4. A working device (12) which receives management object data (21) from a mobile terminal (11), the working device (12) comprising:
a local connection requester (64) that locally communicates with the mobile terminal (11) through wired communication or wireless communication;
a security specification provider (69) that transmits security specification information (23) including security function of the working device to the mobile terminal;
a management object data receiver (66) that receives the management object data (21) and data management contract information (24) indicating a contract of the management object data from the mobile terminal (11);
a security function activator (62) that activates the security function so that the disclosure condition of the management object data (21) is satisfied, based on the data management contract information (24);
a data management record transmitter (68) that transmits a management record (26) of the management object data to the mobile terminal locally re-connected through the local connection requester (64); **characterized by** further comprising
a periodically authentication checker (401) that is activated by the security function activator (62), and requests a user authentication for every predetermined period; and
a data eraser that is activated by the security function activator (62), and erases the management object data (21) if the user authentication has failed.

5. The working device (12) according to claim 4, further comprising:
a differential data extractor (601) that extracts a change point from the management object data (21) and creates differential data from a point of time when the management object data is received, before the management object data is erased; and
an encrypted data storage unit (70) that holds the differential data from the differential data extractor (601).

6. A data management system (1) comprising:
a management server (10) that manages management object data (21);
a mobile terminal (11) which communicates with the management server (10) through a network; and
a working device (12) which locally communicates with the mobile terminal (11) through wired communication or wireless communication,
the management server (10) comprising:
a management object data provider (31) that provides the management object data (21) and disclosure condition information (22) related to a disclosure condition of the management object data to the mobile terminal (11), based on a management object data acquisition request from the mobile terminal; and
a data management record receiver (32) that receives a management record (27) of the provided management object data from the mobile terminal (11),
the mobile terminal (11) comprising:
a management object data acquirer (42) that requests the management server (10) to acquire the management object data, and acquires the management object data (21) and the disclosure condition information (22) related to the disclosure condition of the management object data from the management server;
a local connection receiver (41) that locally communicates with the working device (12) through the wired communication or the wireless communication;
a security specification acquirer (51) that acquires security specification information related to a security function of the working device (12);
a data management contract creator (47) that creates data management contract information (24) indicating a contract related to a management of the management object data of the working device (12), if it is determined that the working device satisfies the disclosure condition of the management object data (21), based on the security specification information of the working device which receives the management object data and the disclosure condition information of the management object data, wherein the data management contract creator (47) acquires a first list of security functions of the working device from the security specifcation information (23) of the working device (12) receiving the management object data (21), creates a second list of security functions needed to satisfy the disclosure condition of the management object data, from the disclosure condition information of the management object data, based on an analysis rule of the disclosure condition, and creates the data management contract information (24) which activates the security functions so that the disclosure condition of the management object data (21) is satisfied of the first list and second list;
a management object data transmitter (48) that transmits the management object data (21) and the created data management contract information (24) to the working device (12);
a data management record receiver (50) that receives the management record (26) of the management object data from the working device that locally communicates by the local connection receiver (41); and
a data management record transmitter (43) that transmits a management record (27) of the received management object data to the management server (10), and
the working device (12) comprising:
a local connection requester (64) that locally communicates with the mobile terminal (11) through the wired communication or the wireless communication;
a security specification provider (69) that provides security specification information (23) related to its security function to the mobile terminal (11);
a management object data receiver (66) that receives the management object data (21) and data management contract information (24) indicating a contract related to a management of the management object data from the mobile terminal (11);
a security function activator (62) that activates the security function so that the disclosure condition of the management object data is satisfied, based on the data management contract information (24); and
a data management record transmitter (68) that transmits a management record (26) of the management object data (21) to the mobile terminal (11) locally re-connected through the local connection requester (64).

7. A data managing method for a data management system (1) having a management server (10) managing management object data (21), a mobile terminal (11) connected to the management server (10) through a network, and a working device (12) locally connected to the mobile terminal (11) through wired communication or wireless communication, such that data communication is enabled, the data managing method comprising:
acquiring, at the mobile terminal (11), the management object data (21) and disclosure condition information (22) related to a disclosure condition of the management object data from the management server (10);
locally communicating, at the mobile terminal (11), with the working device (12) through the wired communication or the wireless communication;
acquiring, at the mobile terminal (11), security specification information (23) related to a security function of the working device from the working device (12);
creating, at the mobile terminal (11), data management contract information (24) indicating a contract related to a management of the management object data (21) of the working device, when the working device satisfies the disclosure condition of the management object data, based on the security specification information (23) of the working device and the disclosure condition information (22) of the management object data,
wherein creating the data management contract information (24) includes acquiring a first list of security functions of the working device (12) from the security specification information (23) of the working device receiving the management object data (21), creating a second list of security functions needed to satisfy the disclosure condition of the management object data (21), from the disclosure condition information (22) of the management object data, based on an analysis rule of the disclosure condition, and creating the data management contract information (24) which activates the security functions so that the disclosure condition of the management object data (21) is satisfied of the first list and second list;
transmitting the management object data (21) including the created data management contract information (24) from the mobile terminal (11) to the working device (12);
activating, at the working device (12), the security function to satisfy the disclosure condition of the management object data (21), based on the data management contract information (24);
transmitting a management record (26) of the management object data from the working device (12) to the locally communicated mobile terminal (11); and
transmitting the management record (27) of the management object data (21) received from the working device (12), from the mobile terminal (11) to the management server (10).

## Patentansprüche

1. Mobilterminal (11), das Verwaltungsobjektdaten (21) an ein Arbeitsgerät (12) sendet, welches Mobilterminal (11) umfasst:
einen Lokalverbindungsempfänger (41), der lokal mit dem Arbeitsgerät (12) durch drahtgebundene Kommunikation oder drahtlose Kommunikation kommuniziert;
einen Halter, der Verwaltungsobjektdaten (21), Offenbarungsbedingungsinformationen (22) der Verwaltungsobjektdaten und eine Analyseregel hält, die zum Analysieren der in den Offenbarungsinformationen enthaltenen Offenbarungsbedingung dient;
einen Sicherheitsspezifikationserfasser (51), der Sicherheitsspezifikationsinformationen (23) crfasst, die eine Sicherheitsfunktion des Arbeitsgerätes (12) angeben;
einen Verwaltungsobjektdatensender (48), der die Verwaltungsobjektdaten (21) mit erstellten Datenverwaltungsvertragsinformationen (24) an das Arbeitsgerät (12) sendet; und
einen Datenverwaltungsaufzeichnungsempfänger (50), der die Verwaltungsaufzeichnung (26) der Verwaltungsobjektdaten (21) von dem Arbeitsgerät (12) empfängt, wenn das Arbeitsgerät durch den Lokalverbindungsempfänger (41) wieder lokal verbunden ist; welches Mobilterminal (11) **dadurch gekennzeichnet ist, dass** es ferner umfasst:
einen Datenverwaltungsvertragsersteller (47), der die Datenverwaltungsvertragsinformationen (24) erstellt, die einen Vertrag der Verwaltungsobjektdaten (21) des Arbeitsgerätes (12) angeben, falls bestimmt wird, dass das Arbeitsgerät die Offenbarungsbedingung der Verwaltungsobjektdaten erfüllt, basierend auf den Sicherheitsspezifikationsinformationen (23) des Arbeitsgerätes (12), das die Verwaltungsobjektdaten (21) und die Offenbarungsbedingungsinformationen (22) der Verwaltungsobjektdaten empfängt;
bei dem der Datenverwaltungsvertragsersteller (47) betriebsfähig ist, um eine erste Liste von Sicherheitsfunktionen des Arbeitsgerätes (12) von den Sicherheitsspezifikationsinformationen (23) des Arbeitsgerätes zu erfassen, das die Verwaltungsobjektdaten (21) empfängt, eine zweite Liste von Sicherheitsfunktionen, die benötigt werden, um die Offenbarungsbcdingung der Verwaltungsobjektdaten (21) zu erfüllen, von den Offenbarungsbedingungsinformationen (22) der Verwaltungsobjektdaten basierend auf der Analyseregel der Offenbarungsbedingung zu erstellen und die Datenverwaltungsvertragsinformationen (24) zu erstellen, die die Sicherheitsfunktionen der ersten Liste und der zweiten Liste aktivieren, so dass die Offenbarungsbedingung der Verwaltungsobjektdaten erfüllt wird.

2. Mobilterminal (11) nach Anspruch 1, ferner umfassend:
einen Sicherheitsaktionsaufforderungssender (44), der das Arbeitsgerät (12) auffordert, die Verwaltungsobjektdaten (21) zu löschen, falls eine Verletzung der Offenbarungsbedingung der an das Arbeitsgerät gesendeten Verwaltungsobjektdaten detektiert wird.

3. Mobilterminal (11) nach Anspruch 1, ferner umfassend:
einen Detektor der Überschreitung einer maximalen Off-line-Periode (302), der eine Warnmeldung sendet, falls das Arbeitsgerät (12), an das die Verwaltungsobjektdaten (21) gesendet worden sind, nach Ablauf einer maximalen Offline-Periode nicht wieder lokal verbunden ist, bei dem die maximale Offline-Periode auf der Basis der Offenbarungsbedingung der Verwaltungsobjektdaten (21) festgelegt wird, die an das Arbeitsgerät (12) gesendet wurden.

4. Arbeitsgerät (12), das Verwaltungsobjektdaten (21) von einem Mobilterminal (11) empfängt, welches Arbeitsgerät (12) umfasst:
einen Lokalverbindungsanforderer (64), der mit dem Mobilterminal (11) durch drahtgebundene Kommunikation oder drahtlose Kommunikation lokal kommuniziert;
einen Sicherheitsspezifikationslieferanten (69), der Sicherheitsspezifikationsinformationen (23), die eine Sicherheitsfunktion des Arbeitsgerätes enthalten, an das Mobilterminal sendet;
einen Verwaltungsobjektdatenempfänger (66), der die Verwaltungsobjektdaten (21) und Datenverwaltungsvertragsinformationen (24), die einen Vertrag der Verwaltungsobjektdaten angeben, von dem Mobilterminal (11) empfängt;
einen Sicherheitsfunktionsaktivierer (62), der die Sicherheitsfunktion aktiviert, so dass die Offenbarungsbedingung der Verwaltungsobjektdaten (21) erfüllt wird, basierend auf den Datenverwaltungsvertragsinformationen (24);
einen Datenverwaltungsaufzeichnungssender (68), der eine Verwaltungsaufzeichnung (26) der Verwaltungsobjektdaten an das Mobilterminal sendet, das durch den Lokalverbindungsanforderer (64) wieder lokal verbunden ist; **dadurch gekennzeichnet, dass** es ferner umfasst:
einen Überprüfer der periodischen Authentisierung (401), der durch den Sicherheitsfunktionsaktivierer (62) aktiviert wird und eine Nutzerauthentisierung für jede vorbestimmte Periode verlangt; und
einen Datenlöscher, der durch den Sicherheitsfunktionsaktivierer (62) aktiviert wird und die Verwaltungsobjektdaten (21) löscht, falls die Nutzerauthentisierung fehlgeschlagen ist.

5. Arbeitsgerät (12) nach Anspruch 4, ferner umfassend:
einen Differenzdatenextrahierer (601), der einen Veränderungspunkt aus den Verwaltungsobjektdaten (21) extrahiert und Differenzdaten ab einem Zeitpunkt des Empfangs der Verwaltungsobjektdaten erstellt, bevor die Verwaltungsobjektdaten gelöscht werden; und
eine Speichereinheit für verschlüsselte Daten (70), die die Differenzdaten von dem Differenzdatenextrahierer (601) hält.

6. Datenverwaltungssystem (1), umfassend:
einen Verwaltungsserver (10), der Verwaltungsobjekrdaten (21) verwaltet;
ein Mobilterminal (11), das mit dem Verwaltungsserver (10) über ein Netz kommuniziert; und
ein Arbeitsgerät (12), das mit dem Mobilterminal (11) durch drahtgebundene Kommunikation oder drahtlose Kommunikation lokal kommuniziert,
welcher Verwaltungsserver (10) umfasst:
einen Verwaltungsobjektdatenlieferanten (31), der die Verwaltungsobjektdaten (21) und Offenbarungsbedingungsinformationen (22) bezüglich einer Offenbarungsbedingung der Verwaltungsobjektdaten an das Mobilterminal (11) basierend auf einer verwaltungsobjektdatenerfassungsaufforderung von dem Mobilterminal liefert; und
einen Datenverwaltungsaufzcichnungsempfänger (32), der eine Verwaltungsaufzeichnung (27) der gelieferten Verwaltungsobjektdaten von dem Mobilterminal (11) empfängt,
welches Mobilterminal (11) umfasst:
einen Verwaltungsobjektdatenerfasser (42), der den Verwaltungsserver (10) auffordert, die Verwaltungsobjektdaten zu erfassen, und die Verwaltungsobjektdaten (21) und die Offenbarungsbedingungsinformationen (22) bezüglich der Offenbarungsbedingung der Verwaltungsobjektdaten von dem Verwaltungsserver erfasst;
einen Lokalverbindungsempfänger (41), der mit dem Arbeitsgerät (12) durch die drahtgebundene Kommunikation oder die drahtlose Kommunikation lokal kommuniziert;
einen Sicherheitsspezifikationserfasser (51), der Sicherheitsspezifikationsinformationen bezüglich einer Sicherheitsfunktion des Arbeitsgerätes (12) erfasst;
einen Datenverwaltungsvertragsersteller (47), der Datenverwaltungsvertragsinformationen (24) erstellt, die einen Vertrag bezüglich einer Verwaltung der Verwaltungsobjektdaten des Arbeitsgerätes (12) angeben, falls bestimmt wird, dass das Arbeitsgerät die Offenbarungsbedingung der Verwaltungsobjektdaten (21) erfüllt, basierend auf den Sicherheitsspezifikationsinformationen des Arbeitsgerätes, das die Verwaltungsobjektdaten und die Offenbarungsbedingungsinformationen der Verwaltungsobjektdaten empfängt, bei dem der Datenverwaltungsvertragsersteller (47) eine erste Liste von Sicherheitsfunktionen des Arbeitsgerätes von den Sicherheitsspezifikationsinformationen (23) des Arbeitsgerätes (12) erfasst, das die Verwaltungsobjektdaten (21) empfängt, eine zweite Liste von Sicherheitsfunktionen, die benötigt werden, um die Offenbarungsbedingung der Verwaltungobjektdaten zu erfüllen, von den Offenbarungsbedingungsinformationen der Verwaltungsobjektdaten basierend auf einer Analyseregel der Offenbarungsbedingung erstellt und die Datenverwaltungsvertragsinformationen (24) erstellt, die die Sicherheitsfunktionen der ersten Liste und der zweiten Liste aktivieren, so dass die Offenbarungsbedingung der Verwaltungsobjektdaten (21) erfüllt wird;
einen Verwaltungsobiektdatensender (48), der die Verwaltungsobjektdaten (21) und die erstellten Datenverwaltungsvertragsinformationen (24) an das Arbeitsgerät (12) sendet;
einen Datenverwaltungsaufzeichnungsempfänger (50), der die Verwaltungsaufzeichnung (26) der Verwaltungsobjektdaten von dem Arbeitsgerät empfängt, das durch den Lokalverbindungsempfänger (41) lokal kommuniziert; und
einen Datenverwaltungsaufzeichnungssender (43), der eine Verwaltungsaufzeichnung (27) der empfangenen Verwaltungsobjektdaten an den Verwaltungsserver (10) sendet, und
welches Arbeitsgerät (12) umfasst:
einen Lokalverbindungsanforderer (64), der mit dem Mobilterminal (11) durch die drahtgebundene Kommunikation oder die drahtlose Kommunikation lokal kommuniziert;
einen Sicherheitsspezifikationslieferanten (69), der Sicherheitsspezifikationsinformationen (23) bezüglich seiner Sicherheitsfunktion an das Mobilterminal (11) sendet;
einen Verwaltungsobjektdatenempfänger (66), der die Verwaltungsobjektdaten (21) und Datenverwaltungsvertragsinformationen (24), die einen Vertrag bezüglich einer Verwaltung der Verwaltungsobjektdaten angeben, von dem Mobilterminal (11) empfängt.;
einen Sicherheitsfunktionsaktivierer (62), der die Sicherheitsfunktion aktiviert, so dass die Offenbarungsbedingung der Verwaltungsobjektdaten erfüllt wird, basierend auf den Datenverwaltungsvertragsinformationen (24); und
einen Datenverwaltungsauf zeichnungssender (68), der eine Verwaltungsaufzeichnung (26) der Verwaltungsobjektdaten (21) an das Mobilterminal (11) sendet, das durch den Lokalverbindungsanforderer (64) wieder lokal verbunden ist.

7. Datenverwaltungsverfahren für ein Datenverwaltungssystem (1) mit einem Verwaltungsserver (10), der Verwaltungsobjektdaten (21) verwaltet, einem Mobilterminal (11), das mit dem Verwaltungsserver (10) über ein Netz verbunden ist, und einem Arbeitsgerät (12), das mit dem Mobilterminal (11) durch drahtgebundene Kommunikation oder drahtlose Kommunikation lokal verbunden ist, so dass eine Datenkommunikation ermöglicht wird, welches Datenverwaltungsverfahren umfasst:
Erfassen, im Mobilterminal (11), der Verwaltungsobjektdaten (21) und Offenbarungsbedingungsinformationen (22) bezüglich einer Offenbarungsbedingung der Verwaltungsobjektdaten von dem Verwaltungsserver (10);
lokales Kommunizieren, im Mobilterminal (11), mit dem Arbeitsgerät (12) durch die drahtgebundene Kommunikation oder die drahtlose Kommunikation;
Erfassen, im Mobilterminal (11), von Sicherheitsspezifikationsinformationen (23) bezüglich einer Sicherheitsfunktion des Arbeitsgerätes von dem Arbeitsgerät (12);
Erstellen, im Mobilterminal (11), von Datenverwaltungsvertragsinformationen (24), die einen Vertrag bezüglich einer Verwaltung der Verwaltungsobjektdaten (21) des Arbeitsgerätes angeben, wenn das Arbeitsgerät die Offenbarungsbedingung der Verwaltungsobjektdaten erfüllt, basicrend auf den Sicherheitsspezifikationsinformationen (23) des Arbeitsgerätes und den Offenbarungsbedingungsinformationen (22) der Verwaltungsobjektdaten,
bei dem das Erstellen der Datenverwaltungsvertragsinformationen (21) das Erfassen einer ersten Liste von Sicherheitsfunktionen des Arbeitsgerätes (12) von den Sicherheitsspezifikationsinformationen (23) des Arbeitsgerätes enthält, das die Verwaltungsobjektdaten (21) empfängt, das Erstellen einer zweiten Liste von Sicherheitsfunktionen, die benötigt werden, um die Offenbarungsbedingung der Verwaltungsobjektdaten (21) zu erfüllen, von den Offenbarungsbedingungsinformationen (22) der Verwaltungsobjektdaten, basierend auf einer Analyseregel der Offenbarungsbedingung, und das Erstellen der Datenverwaltungsvertragsinformationen (24), die die Sicherheitsfunktionen der ersten Liste und der zweiten Liste aktivieren, so dass die Offenbarungsbedingung der Verwaltungsobjektdaten (21) erfüllt wird;
Senden der Verwaltungsobjektdaten (21), die die erstellten Datenverwaltungsvertragsinformationen (24) enthalten, von dem Mobilterminal (11) an das Arbeitsgerät (12);
Aktivieren, im Arbeitsgerät (12), der Sicherheitsfunktion, um die Offenbarungsbedingung der Verwaltungsobjektdaten (21) zu erfüllen, basierend auf den Datenverwaltungsvertragsinformationen (24);
Senden einer Verwaltungsaufzeichnung (26) der Verwaltungsobjektdaten von dem Arbeitsgerät (12) an das lokal verbundene Mobilterminal (11); und
Senden der Verwaltungsaufzeichnung (27) der Verwaltungsobjektdaten (21), die von dem Arbeitsgerät (12) empfangen wurden, von dem Mobilterminal (11) an den Verwaltungsserver (10).

## Revendications

1. Terminal mobile (11) qui transmet des données objet de gestion (21) à un dispositif de travail (12), le terminal mobile (11) comprenant :
un récepteur de connexion locale (41) qui communique localement avec le dispositif de travail (12) par l'intermédiaire d'une communication filaire ou d'une communication sans fil ;
un dispositif de maintien qui maintient des données objet de gestion (21), des informations de condition de divulgation (22) des données objet de gestion, et une règle d'analyse qui est destinée à analyser la condition de divulgation incluse dans les informations de divulgation ;
un acquéreur de spécification de sécurité (51) qui acquiert des informations de spécification de sécurité (23) qui indiquent une fonction de sécurité du dispositif de travail (12) ;
un transmetteur de données objet de gestion (48) qui transmet les données objet de gestion (21) avec des informations de contrat de gestion de données créées (24) au dispositif de travail (12) ; et
un récepteur d'enregistrement de gestion de données (50) qui reçoit l'enregistrement de gestion (26) des données objet de gestion (21) en provenance du dispositif de travail (12), lorsque le dispositif de travail est reconnecté localement par l'intermédiaire du récepteur de connexion locale (41) ; le terminal mobile (11) **caractérisé en ce qu'**il comprend en outre :
un créateur de contrat de gestion de données (47) qui crée les informations de contrat de gestion de données (24) qui indiquent un contrat des données objet de gestion (21) du dispositif de travail (12), s'il est déterminé que le dispositif de travail satisfait à la condition de divulgation des données objet de gestion, sur la base des informations de spécification de sécurité (23) du dispositif de travail (12) recevant les données objet de gestion (21) et des informations de condition de divulgation (22) des données objet de gestion ;
dans lequel le créateur de contrat de gestion de données (47) est exploitable pour acquérir une première liste de fonctions de sécurité du dispositif de travail (12) à partir des informations de spécification de sécurité (23) du dispositif de travail recevant les données objet de gestion (21), créer une seconde liste de fonctions de sécurité nécessaire pour satisfaire à la condition de divulgation des données objet de gestion (21), à partir des informations de condition de divulgation (22) des données objet de gestion, sur la base de la règle d'analyse de la condition de divulgation, et créer les informations de contrat de gestion de données (24) qui activent les fonctions de sécurité de sorte que la condition de divulgation des données objet de gestion soit satisfaite de la première liste et de la seconde liste.

2. Terminal mobile (11) selon la revendication 1, comprenant en outre :
un transmetteur de demande d'action de sûreté (44) qui demande au dispositif de travail (12) d'effacer les données objet de gestion (21), si une violation de la condition de divulgation des données objet de gestion transmises au dispositif de travail est détectée.

3. Terminal mobile (11) selon la revendication 1, comprenant en outre :
un détecteur de dépassement de période hors ligne maximum (302) qui transmet un message d'avertissement, si le dispositif de travail (12) auquel ont été transmises les données objet de gestion (21) n'est pas reconnecté localement après qu'une période hors ligne maximum est passée, dans lequel la période hors ligne maximum est établie sur la base de la condition de divulgation des données objet de gestion (21) transmises au dispositif de travail (12).

4. Dispositif de travail (12) qui reçoit des données objet de gestion (21) en provenance d'un terminal mobile (11), le dispositif de travail (12) comprenant :
un demandeur de connexion locale (64) qui communique localement avec le terminal mobile (11) par l'intermédiaire d'une communication filaire ou d'une communication sans fil ;
un fournisseur de spécification de sécurité (69) qui transmet des informations de spécification de sécurité (23) incluant une fonction de sécurité du dispositif de travail au terminal mobile ;
un récepteur de données objet de gestion (66) qui reçoit les données objet de gestion (21) et des informations de contrat de gestion de données (24) indiquant un contrat des données objet de gestion en provenance du terminal mobile (11) ;
un activateur de fonction de sécurité (62) qui active la fonction de sécurité de sorte que la condition de divulgation des données objet de gestion (21) soit satisfaite, sur la base des informations de contrat de gestion de données (24) ;
un transmetteur d'enregistrement de gestion de données (68) qui transmet un enregistrement de gestion (26) des données objet de gestion au terminal mobile reconnecté localement par l'intermédiaire du demandeur de connexion locale (64) ; **caractérisé en ce qu'**il comprend en outre
un vérificateur d'authentification périodique (401) qui est activé par l'activateur de fonction de sécurité (62), et demande une authentification d'utilisateur pour chaque période prédéterminée ; et
un effaceur de données qui est activé par l'activateur de fonction de sécurité (62), et efface les données objet de gestion (21) si l'authentification d'utilisateur a échoué.

5. Dispositif de travail (12) selon la revendication 4, comprenant en outre :
un extracteur de données différentielles (601) qui extrait un point de changement des données objet de gestion (21) et crée des données différentielles à partir d'un moment où les données objet de gestion sont reçues, avant que les données objet de gestion ne soient effacées ; et
une unité de stockage de données chiffrées (70) qui maintient les données différentielles en provenance de l'extracteur de données différentielles (601).

6. Système de gestion de données (1) comprenant :
un serveur de gestion (10) qui gère des données objet de gestion (21) ;
un terminal mobile (11) qui communique avec le serveur de gestion (10) par l'intermédiaire d'un réseau ; et
un dispositif de travail (12) qui communique localement avec le terminal mobile (11) par l'intermédiaire d'une communication filaire ou d'une communication sans fil,
le serveur de gestion (10) comprenant :
un fournisseur de données objet de gestion (31) qui fournit les données objet de gestion (21) et des informations de condition de divulgation (22) liées à une condition de divulgation des données objet de gestion au terminal mobile (11), sur la base d'une demande d'acquisition de données objet de gestion en provenance du terminal mobile ; et
un récepteur d'enregistrement de gestion de données (32) qui reçoit un enregistrement de gestion (27) des données objet de gestion fournies en provenance du terminal mobile (11),
le terminal mobile (11) comprenant :
un acquéreur de données objet de gestion (42) qui demande au serveur de gestion (10) d'acquérir les données objet de gestion, et acquiert les données objet de gestion (21) et les informations de condition de divulgation (22) liées à la condition de divulgation des données objet de gestion à partir du serveur de gestion ;
un récepteur de connexion locale (41) qui communique localement avec le dispositif de travail (12) par l'intermédiaire de la communication filaire ou de la communication sans fil ;
un acquéreur de spécification de sécurité (51) qui acquiert des informations de spécification de sécurité liées à une fonction de sécurité du dispositif de travail (12) ;
un créateur de contrat de gestion de données (47) qui crée des informations de contrat de gestion de données (24) indiquant un contrat lié à une gestion des données objet de gestion du dispositif de travail (12), s'il est déterminé que le dispositif de travail satisfait à la condition de divulgation des données objet de gestion (21), sur la base des informations de spécification de sécurité du dispositif de travail qui reçoit les données objet de gestion et les informations de condition de divulgation des données objet de gestion, dans lequel le créateur de contrat de gestion de données (47) acquiert une première liste de fonctions de sécurité du dispositif de travail à partir des informations de spécification de sécurité (23) du dispositif de travail (12) recevant les données objet de gestion (21), crée une seconde liste de fonctions de sécurité nécessaire pour satisfaire à la condition de divulgation des données objet de gestion, à partir des informations de condition de divulgation des données objet de gestion, sur la base d'une règle d'analyse de la condition de divulgation, et crée les informations de contrat de gestion de données (24) qui activent les fonctions de sécurité de sorte que la condition de divulgation des données objet de gestion (21) soit satisfaite de la première liste et de la seconde liste ;
un transmetteur de données objet de gestion (48) qui transmet les données objet de gestion (21) et les informations de contrat de gestion de données créées (24) au dispositif de travail (12) ;
un récepteur d'enregistrement de gestion de données (50) qui reçoit l'enregistrement de gestion (26) des données objet de gestion en provenance du dispositif de travail qui communique localement par le récepteur de connexion locale (41) ; et
un transmetteur d'enregistrement de gestion de données (43) qui transmet un enregistrement de gestion (27) des données objet de gestion reçues au serveur de gestion (10), et
le dispositif de travail (12) comprenant :
un demandeur de connexion locale (64) qui communique localement avec le terminal mobile (11) par l'intermédiaire de la communication filaire ou de la communication sans fil ;
un fournisseur de spécification de sécurité (69) qui transmet des informations de spécification de sécurité (23) liées à sa fonction de sécurité au terminal mobile (11) ;
un récepteur de données objet de gestion (66) qui reçoit les données objet de gestion (21) et des informations de contrat de gestion de données (24) indiquant un contrat lié à une gestion des données objet de gestion en provenance du terminal mobile (11) ;
un activateur de fonction de sécurité (62) qui active la fonction de sécurité de sorte que la condition de divulgation des données objet de gestion soit satisfaite, sur la base des informations de contrat de gestion de données (24) ; et
un transmetteur d'enregistrement de gestion de données (68) qui transmet un enregistrement de gestion (26) des données objet de gestion (21) au terminal mobile (11) reconnecté localement par l'intermédiaire du demandeur de connexion locale (64).

7. Procédé de gestion de données pour un système de gestion de données (1) ayant un serveur de gestion (10) gérant des données objet de gestion (21), un terminal mobile (11) connecté au serveur de gestion (10) par l'intermédiaire d'un réseau, et un dispositif de travail (12) connecté localement au terminal mobile (11) par l'intermédiaire d'une communication filaire ou d'une communication sans fil, de sorte qu'une communication de données soit permise, le procédé de gestion de données comprenant :
l'acquisition, au niveau du terminal mobile (11), des données objet de gestion (21) et d'informations de condition de divulgation (22) liées à une condition de divulgation des données objet de gestion à partir du serveur de gestion (10) ;
la communication locale, au niveau du terminal mobile (11), avec le dispositif de travail (12) par l'intermédiaire de la communication filaire ou de la communication sans fil ;
l'acquisition, au niveau du terminal mobile (11), d'informations de spécification de sécurité (23) liées à une fonction de sécurité du dispositif de travail à partir du dispositif de travail (12) ;
la création, au niveau du terminal mobile (11), d'informations de contrat de gestion de données (24) indiquant un contrat lié à une gestion des données objet de gestion (21) du dispositif de travail, lorsque le dispositif de travail satisfait à la condition de divulgation des données objet de gestion, sur la base des informations de spécification de sécurité (23) du dispositif de travail et des informations de condition de divulgation (22) des données objet de gestion,
dans lequel la création des informations de contrat de gestion de données (24) inclut l'acquisition d'une première liste de fonctions de sécurité du dispositif de travail (12) à partir des informations de spécification de sécurité (23) du dispositif de travail recevant les données objet de gestion (21), la création d'une seconde liste de fonctions de sécurité nécessaire pour satisfaire à la condition de divulgation des données objet de gestion (21), à partir des informations de condition de divulgation (22) des données objet de gestion, sur la base d'une règle d'analyse de la condition de divulgation, et la création des informations de contrat de gestion de données (24) qui activent les fonctions de sécurité de sorte que la condition de divulgation des données objet de gestion (21) soit satisfaite de la première liste et de la seconde liste ;
la transmission des données objet de gestion (21) incluant les informations de contrat de gestion de données créées (24) du terminal mobile (11) au dispositif de travail (12) ;
l'activation, au niveau du dispositif de travail (12), de la fonction de sécurité pour satisfaire à la condition de divulgation des données objet de gestion (21), sur la base des informations de contrat de gestion de données (24) ;
la transmission d'un enregistrement de gestion (26) des données objet de gestion du dispositif de travail (12) au terminal mobile faisant l'objet d'une communication locale (11) ; et
la transmission de l'enregistrement de gestion (27) des données objet de gestion (21) reçues en provenance du dispositif de travail (12), du terminal mobile (11) au serveur de gestion (10).
